# EUROPEAN PATENT APPLICATION

(11) **EP 3 309 427 A2**
(43) Date of publication of application: **18.04.2018**
(21) Application number: 17187188.2
(22) Date of filing: 22.08.2017
(51) Int. Cl.: F16H 48/24, B60K 23/04

(54) **AUTOMATED DIFFERENTIAL LOCKING SYSTEM**

(30) Priority: 22.08.2016 US 201662377862 P
(71) Applicant: Dana Heavy Vehicle Systems Group, LLC, Maumee, OH 43537 (US)
(72) Inventor: Trost, Harry W., Royal Oak, MI 48073 (US); Krishnan, Sajeev C., Perrysburg, OH 43551 (US)
(74) Representative: Pfenning, Meinig & Partner mbB

(57) **Abstract**

An automated differential locking system. The system includes a differential locking system sliding collar that is selectively engageable with a differential case. An actuator disposed within a protruding portion of a housing is in driving engagement with the sliding collar of the differential locking system. In pneumatic communication with the actuator is a differential lock pneumatic solenoid valve that is in electrical communication with pneumatic solenoid valve slave controller. The solenoid valve and the slave controller are J-1939 and/or ISO-11898 compliant. At least a portion of an outer surface of the solenoid valve and the slave controller are integrally connected to at least a portion of an outer surface of the protruding portion of the housing. In response to an occurrence or absence of a predetermined vehicle operating condition, a second controller sends a signal over a vehicle communication bus to engage and/or disengage the collar with the differential case.

## Description

### CROSS REFERENCE TO RELATED APPLICATIONS

The present application claims the benefit to U.S. Provisional Patent Application No. 62/377,862 filed on August 22, 2016, which is incorporated herein by reference in its entirety.

### FIELD OF THE DISCLOSURE

The present disclosure relates to an automated differential locking system for use in a motor vehicle.

### BACKGROUND OF THE DISCLOSURE

A locking differential is a variation of a standard automotive differential (or open differential) which enables a vehicle to experience an increase in traction in comparison to the standard differential. This increase in vehicle traction is achieved by locking the wheels on an axle system together. By locking the wheels on the axle system together, the differential is prevented from allowing a differential action to occur. As a result, the wheels of the axle system of act as if they are mounted on a common shaft thereby restricting the wheels of the axle system to have the same rotational speed. In order to lock the differential(s) found in one or more axle assemblies of the vehicle, such as but not limited to tandem axle assemblies, the differential(s) may be fitted with a differential locking system that is able to selectively lock (engage) and unlock (disengage) the differential as needed.

One of the problems with incorporating the differential locking system into a vehicle is the availability of hardware resources within the existing infrastructure of the vehicle. Most vehicles have maxed out all of their available i/o pins (inputs and outputs) in the engine control unit making it hard to incorporate differential locking systems into the axle system(s) of the vehicle. Even though the complexity of the software needed to operate the differential locking system is low enough to be controlled by the engine control unit of the vehicle, there is typically not enough i/o pins (inputs and/or outputs) available that can be dedicated to the control of the differential locking system. As a result, additional components need to be added to the vehicle to be able to control the differential locking system. This increases the overall costs associated with the drive axle system of the vehicle. It would therefore be advantageous to develop a differential locking system that was able to engage and disengage a vehicle differential using the existing infrastructure that is already available in the vehicle.

Additionally, it is understood that automated differential locking systems are particularly useful in tandem rear axle vehicles (herein after referred to as "tandem axle vehicles"). Tandem axle vehicles driven in a 6x2 driving mode typically have a lower traction capability but have a higher fuel efficiency than tandem axle vehicles driven in a 6x4 driving mode. It would therefore also be advantageous to develop an automated differential locking system for a tandem axle vehicle that can be used to selectively transition the vehicle between the 6x2 and the 6x4 driving modes.

Furthermore, it would be advantageous to develop an automated differential locking system that is scalable and able to be used in a wide variety of vehicles and applications.

### SUMMARY OF THE DISCLOSURE

An automated differential locking system. The system includes a differential locking system sliding collar that is selectively engageable with a differential case. An actuator disposed within a protruding portion of a housing is in driving engagement with the sliding collar of the differential locking system. In pneumatic communication with the actuator is a differential lock pneumatic solenoid valve that is in electrical communication with pneumatic solenoid valve slave controller. The solenoid valve and the slave controller are J-1939 and/or ISO-11898 compliant. At least a portion of an outer surface of the solenoid valve and the slave controller are integrally connected to at least a portion of an outer surface of the protruding portion of the housing. In response to an occurrence or absence of a predetermined vehicle operating condition, a second controller sends a signal over a vehicle communication bus to engage and/or disengage the sliding collar with the differential case.

### BRIEF DESCRIPTION OF THE DRAWINGS

The above, as well as other advantages of the present disclosure, will become readily apparent to those skilled in the art from the following detailed description when considered in light of the accompanying drawings in which:
FIG.1 is a schematic top-plan view of a vehicle having a differential locking system according to one embodiment of the disclosure;
FIG. 2 is a schematic top-plan view of a vehicle having a differential locking system according to another embodiment;
FIG. 3 is a schematic top-plan view of a vehicle having an inter-axle differential locking system according to yet another embodiment;
FIG. 4 is a partial cut-away schematic side view of an axle system having a differential locking system according to an embodiment of the disclosure where the differential locking system is in a first position;
FIG. 5 is a partial cut-away schematic side view of the axle system illustrated in FIG. 4 where the differential locking system is in a second position;
FIG. 6 is a partial cut-away schematic side view of the differential locking system illustrated in FIGS. 4 and 5 according to an alternative embodiment of the disclosure where the differential locking system is in a first position;
FIG. 7 is a partial cut-away schematic side view of the differential locking system illustrated in FIG. 6 where the differential locking system is in a second position;
FIG. 8 is a partial cut-away schematic side view of the differential locking system illustrated in FIGS. 4-7 according to another embodiment of the disclosure;
FIG. 9 is a partial cut-away schematic side view of the differential locking system illustrated in FIGS. 4-8 according to an yet another embodiment of the disclosure;
FIG. 10 is a partial cut-away schematic side view of the differential locking system illustrated in FIGS. 4-8 according to still yet another embodiment of the disclosure;
FIG. 11 is a partial cut-away schematic side view of the differential locking system illustrated in FIGS. 4-7 and 9 according to still a further embodiment of the disclosure;
FIG. 12 is a schematic exploded view of a differential lock pneumatic solenoid valve and the pneumatic solenoid slave controller assembly according to an embodiment of the disclosure;
FIG. 13 is a diagram illustrating an electrical control system for the differential locking system illustrated in FIGS. 4-12 according to an embodiment of the disclosure;
FIG. 14 is a diagram illustrating an electrical control system for the differential locking system illustrated in FIGS. 4-12 according to an alternative embodiment of the disclosure;
FIG. 15 is a flow chart illustrating a method of operating the differential locking system illustrated in FIGS. 4-12 according to an embodiment of the disclosure; and
FIG. 16 is a flow chart illustrating a sub-routine used to engage and/or disengage a differential locking system according to an embodiment of the disclosure with a differential case of a differential assembly of an axle system housing.

### DETAILED DESCRIPTION OF THE DISCLOSURE

It is to be understood that the invention may assume various alternative orientations and step sequences, except where expressly specified to the contrary. It is also understood that the specific devices and processes illustrated in the attached drawings, and described in the specification are simply exemplary embodiments of the inventive concepts disclosed and defined herein. Hence, specific dimensions, directions or other physical characteristics relating to the various embodiments disclosed are not to be considered as limiting, unless expressly stated otherwise.

It is within the scope of this disclosure, and as a non-limiting example, that the automated differential locking system disclosed herein may be used in automotive, off-road vehicle, all-terrain vehicle, construction, structural, marine, aerospace, locomotive, military, machinery, robotic and/or consumer product applications. Additionally, as a non-limiting example, the automated differential locking system disclosed herein may also be used in passenger vehicle, electric vehicle, hybrid vehicle, commercial vehicle and/or heavy vehicle applications.

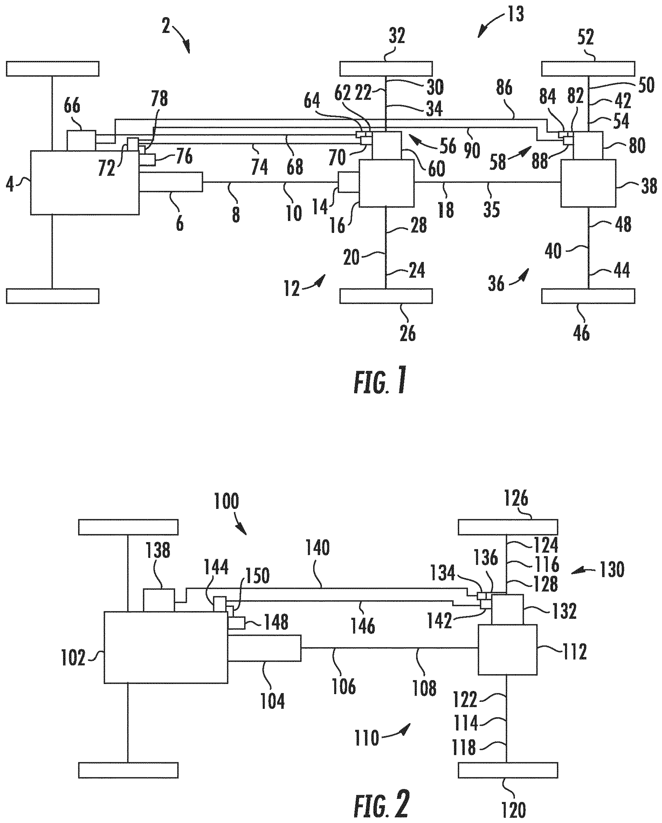

FIG. 1 schematically illustrates a vehicle 2 having a differential locking system according to an embodiment of the disclosure. The vehicle 2 has an engine 4, which is drivingly connected to a transmission 6. A transmission output shaft 8 is then drivingly connected to the end of the transmission 6 opposite the engine 4. The transmission 6 is a power management system which provides controlled application of the rotational power provided by the engine 4 by means of a gearbox.

A first propeller shaft 10 extends from the transmission output shaft 8 and drivingly connects the transmission 6 to a forward tandem axle system 12 of a tandem axle system 13 having an inter-axle differential 14. The first propeller shaft 10 may be connected to the inter-axle differential 14 through one or more of the following components (not shown) a drive shaft, a stub shaft, a coupling shaft, a forward tandem axle system input shaft, a pinion gear shaft, an inter-axle differential pinion gear shaft and/or an inter-axle differential input shaft. The inter-axle differential 14 is a device that divides the rotational power generated by the engine 4 between the axles in the vehicle 2. The rotational power is transmitted through the forward tandem axle system 12 as described in more detail below.

As illustrated in FIG. 1, the inter-axle differential 14 is drivingly connected to a forward tandem axle differential 16 and a forward tandem axle output shaft 18. The forward tandem axle differential 16 is a set of gears that allows the outer drive wheel(s) of a wheeled vehicle 2 to rotate at a faster rate than the inner drive wheel(s).

The forward tandem axle system 12 further includes a first forward tandem axle half shaft 20 and a second forward tandem axle half shaft 22. The first forward tandem axle half shaft 20 extends substantially perpendicular to the first propeller shaft 10. A first end portion 24 of the first forward tandem axle half shaft 20 is drivingly connected to a first forward tandem axle wheel assembly 26 and a second end portion 28 of the first forward tandem axle half shaft 20 is drivingly connected to a side of the forward tandem axle differential 16. As a non-limiting example, the second end portion 28 of the first forward tandem axle half shaft 20 is drivingly connected to a forward tandem axle differential side gear, a separate stub shaft, a separate coupling shaft, a first forward tandem axle differential output shaft and/or a shaft that is formed as part of a forward tandem axle differential side gear.

Extending substantially perpendicular to the first propeller shaft 10 is the second forward tandem axle half shaft 22. A first end portion 30 of the second forward tandem axle half shaft 22 is drivingly connected to a second forward tandem axle wheel assembly 32. A second end portion 34 of the second forward tandem axle half shaft 22 is drivingly connected to a side of the forward tandem axle differential 16 opposite the first forward tandem axle half shaft 20. As a non-limiting example, the second end portion 34 of the second forward tandem axle half shaft 22 is drivingly connected to a forward tandem axle differential side gear, a separate stub shaft, a separate coupling shaft, a second forward tandem axle differential output shaft and/or a shaft that is formed as part of a forward tandem axle differential side gear.

One end of the forward tandem axle system output shaft 18 is drivingly connected to a side of the inter-axle differential 14 opposite the first propeller shaft 10. Drivingly connected to an end of the forward tandem axle output shaft 18, opposite the inter-axle differential 14, is a second propeller shaft 35. The second propeller shaft 35 extends from the forward tandem axle system 12 to a rear tandem axle system 36 of the tandem axle system 13 of the vehicle 2. An end of the second propeller shaft 35, opposite the forward tandem axle output shaft 18, is drivingly connected to a rear tandem axle differential 38 of the rear tandem axle system 36. It is within the scope of this disclosure and as a non-limiting example that the second propeller shaft 35 may be connected to the rear tandem axle differential 38 through one or more of the following (not shown) a drive shaft, a propeller shaft, a stub shaft, a coupling shaft, a rear tandem axle system input shaft, a pinion gear shaft and/or a rear tandem axle differential input shaft. The rear tandem axle differential 38 is a set of gears that allows the outer drive wheel(s) of a wheeled vehicle 2 to rotate at a faster rate than the inner drive wheel(s). The rotational power is transmitted through the rear tandem axle system 36 as described in more detail below.

The rear tandem axle system 36 further includes a first rear tandem axle half shaft 40 and a second rear tandem axle half shaft 42. The first rear tandem axle half shaft 40 extends substantially perpendicular to the second propeller shaft 35. A first end portion 44 of the first rear tandem axle half shaft 40 is drivingly connected to a first rear tandem axle wheel assembly 46 and a second end portion 48 of the first rear tandem axle half shaft 40 is drivingly connected to a side of the rear tandem axle differential 38. As a non-limiting example, the second end portion 48 of the first rear tandem axle half shaft 40 is drivingly connected to a rear tandem axle differential side gear, a separate stub shaft, a separate coupling shaft, a first rear tandem axle differential output shaft and/or a shaft that is formed as part of a rear tandem axle differential side gear.

Extending substantially perpendicular to the second propeller shaft 35 is the second rear tandem axle half shaft 42. A first end portion 50 of the second rear tandem axle half shaft 42 is drivingly connected to a second rear tandem axle wheel assembly 52. A second end portion 54 of the second rear tandem axle half shaft 42 is drivingly connected to a side of the rear tandem axle differential 38 opposite the first rear tandem axle half shaft 40. As a non-limiting example, the second end portion 54 of the second rear tandem axle half shaft 42 is drivingly connected to a rear tandem axle differential side gear, a separate stub shaft, a separate coupling shaft, a second rear tandem axle differential output shaft and/or a shaft that is formed as part of a rear tandem axle differential side gear.

As it can be seen by referencing FIG. 1 of the disclosure, the vehicle 2 may further include a forward tandem axle differential locking system 56 and/or a rear tandem axle differential locking system 58. The forward tandem axle differential locking system 56 includes a forward tandem axle differential locking system 60 that drivingly connects the second forward tandem axle half shaft 22 to the forward tandem axle differential 16. The forward tandem axle differential locking system 60 allows the vehicle 2 to experience an increase in traction by locking the wheels 26 and 32 on the forward tandem axle system 12 together. This restricts the rotation of the wheels 26 and 32 to the same speed and prevents a differential action from occurring within the forward tandem axle differential 16 as if they were mounted on a common shaft.

In order to selectively transition the forward tandem axle differential locking system 60 between a first position (a disengaged position) and/or second position (an engaged position), a forward tandem axle pneumatic actuator 62 is used. The forward tandem axle pneumatic actuator 62 is drivingly engaged with the forward tandem axle differential locking system 60.

Pneumatically connected to the forward tandem axle pneumatic actuator 62 is a forward tandem axle pneumatic solenoid valve 64 having a first position (not shown) and a second position (not shown). According to an embodiment of the disclosure and as a non-limiting example, the forward tandem axle pneumatic solenoid valve 64 complies with Society of Automotive Engineers (SAE) J-1939, SAE J-1939-71, SAE J-1939-82, SAE J-1939-84 and/or ISO-11898 standards. SAE J-1939 is an internal vehicle communication network that interconnects the various components in the vehicle 2. This will allow for communication and diagnostics among the various components of the vehicle. By making the forward tandem axle pneumatic solenoid valve 64 compliant with SAE J-1939, SAE J-1939-71, SAE J-1939-82, SAE J-1939-84 and/or ISO-11898 standards, it allows the forward tandem axle pneumatic solenoid valve 64 to send, receive and/or interpret messages formatted according to SAE J-1939 and/or SAE J-1939-71 standard protocol(s).

In pneumatic communication with the forward tandem axle pneumatic solenoid valve 64 is a compressed air supply 66 via a forward tandem axle pneumatic solenoid air-line 68. The compressed air supply 66 provides the energy necessary to selectively transition the forward tandem axle differential locking system 60 between the first disengaged position (not shown) and/or second engaged position (not shown).

When the forward tandem axle pneumatic solenoid valve 64 is in its first position (not shown), the forward tandem axle pneumatic solenoid valve 64 is closed. When the forward tandem axle pneumatic solenoid valve 64 is closed, the compressed air from the compressed air supply 66 is blocked thereby preventing the actuation of the forward tandem axle pneumatic actuator 62.

When the forward tandem axle pneumatic solenoid valve 64 is in its second position (not shown), the forward tandem axle pneumatic solenoid valve 64 is open. Once open, compressed air is allowed to flow from the compressed air supply 66, through the forward tandem axle pneumatic solenoid air-line 68, to the forward tandem axle pneumatic actuator 62. The compressed air then actuates the forward tandem axle pneumatic actuator 62 and engages the forward tandem axle differential locking system 60 with the forward tandem axle differential 16.

In order to instruct the forward tandem axle pneumatic solenoid valve 64 to open or close, it is put into electrical communication with a forward tandem axle pneumatic solenoid slave controller 70. According to an embodiment of the disclosure and as a non-limiting example, the forward tandem axle pneumatic solenoid slave controller 70 complies with SAE J-1939, SAE J-1939-71, SAE J-1939-82, SAE J-1939-84 and/or ISO-11898 standards. By making the forward tandem axle pneumatic solenoid slave controller 70 compliant with SAE J-1939, SAE J-1939-71, SAE J-1939-82, SAE J-1939-84 and/or ISO-11898 standards, it allows the forward tandem axle pneumatic solenoid slave controller 70 to send, receive and/or interpret messages formatted according to SAE J-1939 and/or SAE J-1939-71 standard protocol(s).

The forward tandem axle pneumatic solenoid slave controller 64 is then in electrical communication with a second controller 72 via a forward tandem axle pneumatic solenoid slave controller data-link 74. In accordance with an embodiment of the disclosure and as a non-limiting example, the second controller 72 complies with SAE J-1939, SAE J-1939-71, SAE J-1939-82, SAE J-1939-84 and/or ISO-11898 standards. By making the second controller 72 compliant with J-1939, J-1939-71, J-1939-82, J-1939-84 and/or ISO-11898 standards, it allows the second controller 72 to send, receive and/or interpret messages formatted according to SAE J-1939 and/or SAE J-1939-71 standard protocol(s). As a non-limiting example, the second controller 72 may be a master controller, an instructing controller, a second slave controller or any other controller that is capable of sending, receiving and/or interpreting messages formatted according to SAE J-1939 and/or SAE J-1939-71 standard protocol(s).

Additionally, the second controller 72 is also in electrical communication with a vehicle communication bus 76 via a vehicle communication bus data-link 78. The vehicle communication bus 76 is a specialized internal communications network that interconnects the various components found in the vehicle 2. As a non-limiting example, the vehicle communication bus 76 may be a controller area network (CAN bus) that conforms to SAE J-1939, SAE J-1939-71, SAE J-1939-82, SAE J-1939-84 and/or ISO-11898 standards. The CAN bus is a type of vehicle communication bus 76 that is designed to allow the various microcontrollers and devices in the vehicle 2 to communicate with each other without the need for a host computer. By making the vehicle communication bus 76 compliant with SAE J-1939, SAE J-1939-71, SAE J-1939-82, SAE J-1939-84 and/or ISO-11898 standards, it allows the vehicle communication bus 76 to send, receive and/or interpret messages formatted according to SAE J-1939 and/or SAE J-1939-71 standard protocol(s).

When a pre-determined vehicle operating condition is detected, the second controller 72 sends an instruction over the vehicle communication bus 76 to instruct the forward tandem axle pneumatic solenoid slave controller 70 to open the forward tandem axle pneumatic solenoid valve 64. This allows the compressed air from the compressed air supply 66 to actuate the forward tandem axle pneumatic actuator 62 thereby engaging the forward tandem axle differential locking system 60 with the forward tandem axle differential 16.

As discussed previously, the vehicle 2 may include the rear tandem axle differential locking system 58. In accordance with the embodiment of the disclosure illustrated in FIG. 1 and as a non-limiting example, the rear tandem axle differential locking system 58 includes a rear tandem axle differential locking system 80 that drivingly connects the second rear tandem axle half shaft 42 to the rear tandem axle differential 38. The rear tandem axle differential locking system 80 allows the vehicle 2 to experience an increase in traction by locking the wheels 46 and 52 on the rear tandem axle system 36 together. This restricts the rotation of the wheels 46 and 52 to the same speed and prevents a differential action from occurring within the rear tandem axle differential 38 as if they were mounted on a common shaft.

In order to selectively transition the rear tandem axle differential locking system 80 between a first position (a disengaged position) and/or a second position (an engaged position), a rear tandem axle pneumatic actuator 82 is used. The rear tandem axle pneumatic actuator 82 is drivingly engaged with the rear tandem axle differential locking system 80.

Pneumatically connected to the rear tandem axle pneumatic actuator 82 is a rear tandem axle pneumatic solenoid valve 84 having a first position (not shown) and a second position (not shown). In accordance with an embodiment of the disclosure and as a no-limiting example, the rear tandem axle pneumatic solenoid valve 84 complies with SAE J-1939, SAE J-1939-71, SAE J-1939-82, SAE J-1939-84 and/or ISO-11898 standards. SAE J-1939 is an internal vehicle communication network that interconnects the various components in the vehicle 2. By making the rear tandem axle pneumatic solenoid valve 84 compliant with SAE J-1939, SAE J-1939-71, SAE J-1939-82, SAE J-1939-84 and/or ISO-11898 standards, it allows the rear tandem axle pneumatic solenoid valve 84 to send, receive and/or interpret messages formatted according to SAE J-1939 and/or SAE J-1939-71 standard protocol(s).

In pneumatic communication with the rear tandem axle pneumatic solenoid valve 84 is the compressed air supply 66 via a rear tandem axle pneumatic solenoid air-line 86. The compressed air supply 66 provides the energy necessary to selectively translate the rear tandem axle differential locking system between the first disengaged position (not shown) and/or second engaged position (not shown).

When the rear tandem axle pneumatic solenoid valve 84 is in its first position (not shown), the rear tandem axle pneumatic solenoid valve 84 is closed. When the rear tandem axle pneumatic solenoid valve 84 is closed, the compressed air from the compressed air supply 66 is blocked thereby preventing the actuation of the rear tandem axle pneumatic actuator 82.

When the rear tandem axle pneumatic solenoid valve 84 is in its second position (not shown), the rear tandem axle pneumatic solenoid valve 84 is open. Once open, compressed air is allowed to flow from the compressed air supply 66, through the rear tandem axle pneumatic solenoid air-line 86, to the forward tandem axle pneumatic actuator 82. The compressed air then actuates the rear tandem axle pneumatic actuator 82 and engages the rear tandem axle differential locking system 80 with the rear tandem axle differential 38.

In order to instruct the rear tandem axle pneumatic solenoid valve 84 to open or close, it is put into electrical communication with a rear tandem axle pneumatic solenoid slave controller 88. According to an embodiment of the disclosure and as a non-limiting example, the rear tandem axle pneumatic solenoid slave controller 88 complies with SAE J-1939, SAE J-1939-71, SAE J-1939-82, SAE J-1939-84 and/or ISO-11898 standards. By making the rear tandem axle pneumatic solenoid slave controller 88 compliant with SAE J-1939, SAE J-1939-71, SAE J-1939-82, SAE J-1939-84 and/or ISO-11898 standards, it allows the rear tandem axle pneumatic solenoid slave controller 88 to send, receive and/or interpret messages formatted according to SAE J-1939 and/or SAE J-1939-71 standard protocol(s).

The rear tandem axle pneumatic solenoid slave controller 88 is then in electrical communication with the second controller 72 via a rear tandem axle pneumatic solenoid slave controller data-link 90. It is within the scope of this disclosure that the second controller 72 is also in electrical communication with the vehicle communication bus 76 via the vehicle communication bus data-link 78.

When a pre-determined vehicle operating condition is detected, the second controller 72 sends an instruction over the vehicle communication bus 76 to instruct the rear tandem axle pneumatic solenoid slave controller 88 to open the rear tandem axle pneumatic solenoid valve 84. This allows the compressed air from the compressed air supply 66 to actuate the rear tandem axle pneumatic actuator 82 thereby engaging the rear tandem axle differential locking system 80 with the rear tandem axle differential 38.

According to an alternative embodiment of the disclosure (not shown), the rear tandem axle pneumatic solenoid slave controller 88 may be in electrical communication with a third controller (not shown) via a third controller data-link (not shown). In accordance with an embodiment of the disclosure and as a non-limiting example, the third controller (not shown) complies with SAE J-1939, SAE J-1939-71, SAE J-1939-82, SAE J-1939-84 and/or ISO-11898 standards. By making the third controller (not shown) compliant with SAE J-1939, SAE J-1939-71, SAE J-1939-82, SAE J-1939-84 and/or ISO-11898 standards, it allows the third controller (not shown) to send, receive and/or interpret messages formatted according to SAE J-1939 and/or SAE J-1939-71 standard protocol(s). As a non-limiting example, the third controller (not shown) may be a master controller, an instructing controller, a third slave controller or any other controller that is capable of sending, receiving and/or interpreting messages formatted according to SAE J-1939 and/or SAE J-1939-71 standard protocol(s).

In accordance with this embodiment (not shown), the third controller (not shown) is in electrical communication with the vehicle communication bus 76 via a vehicle communication bus data-link (not shown).

When a pre-determined vehicle operating condition is detected, the third controller (not shown) sends an instruction over the vehicle communication bus 76 to instruct the rear tandem axle pneumatic solenoid slave controller 88 to open the rear tandem axle pneumatic solenoid valve 84. This allows the compressed air from the compressed air supply 66 to actuate the rear tandem axle pneumatic actuator 82 thereby engaging the rear tandem axle differential locking system 80 with the rear tandem axle differential 38.

By making the forward tandem axle pneumatic solenoid valve 64, the rear tandem axle pneumatic solenoid valve 84, the forward tandem axle pneumatic solenoid slave controller 70, the rear tandem axle pneumatic solenoid slave controller 88, the second controller 72, the third controller (not shown) and/or the vehicle communication bus 76 compliant with SAE J-1939, SAE J-1939-71, SAE J-1939-82, SAE J-1939-84 and/or ISO-11898 standards, the forward tandem axle differential locking system 56 and/or the rear tandem axle differential locking system 58 are able to be installed using the existing infrastructure within the vehicle 2. This means that the forward rear tandem axle differential locking system 56 and/or the rear tandem axle differential locking system 58 can be installed into the vehicle 2 without adding any additional or new components to the infrastructure of the vehicle 2. This in turn makes the system more cost efficient. Additionally, this allows the forward and/or the rear tandem axle differential lock pneumatic solenoid valves 64 and/or 84 to be controlled by any controller in the data-link of the vehicle communication bus 76 that has adequate memory to accommodate the control logic needed to engage and/or disengage the differential locking systems 60 and/or 80. Furthermore, this also gives the differential locking systems 56 and/or 58 standardization and scalability, allowing the systems 56 and/or 58 to be used across a wide range of platforms and allowing the differential locking systems 56 and/or 58 to be compatible with the standard diagnostic tools used by field service personnel.

FIG. 2 illustrates a schematic top-plan view of a vehicle 100 having a differential locking system according to another embodiment. In accordance with the embodiment of the disclosure illustrated in FIG. 2, the vehicle 100 has an engine 102 that is drivingly connected to a transmission 104. A transmission output shaft 106 is then drivingly connected to the end of the transmission 104 opposite the engine 102.

A first propeller shaft 108 extends from the transmission output shaft 106 and drivingly connects the transmission 104 to an axle system 110 having a differential 112. The first propeller shaft 108 may be connected to the differential 112 through one or more of the following components (not shown) a drive shaft, a stub shaft, a coupling shaft, a differential input shaft and/or a pinion gear shaft. The rotational power is transmitted through the axle system 110 as described in more detail below.

The axle system 110 further includes a first axle half shaft 114 and a second axle half shaft 116. The first axle half shaft 114 extends substantially perpendicular to the first propeller shaft 108. A first end portion 118 of the first axle half shaft 114 is drivingly connected to a first axle wheel assembly 120 and a second end portion 122 of the first axle half shaft 114 is drivingly connected to a side of the differential 112. As a non-limiting example, the second end portion 122 of the first axle half shaft 114 is drivingly connected to a differential side gear, a separate stub shaft, a separate coupling shaft, a first differential output shaft and/or a shaft that is formed as part of a differential side gear.

Extending substantially perpendicular to the first propeller shaft 108 is the second axle half shaft 116. A first end portion 124 of the second axle half shaft 116 is drivingly connected to a second axle wheel assembly 126. A second end portion 128 of the second axle half shaft 116 is drivingly then connected to a side of the differential 112 opposite the first axle half shaft 114. As a non-limiting example, the second end portion 128 of the second axle half shaft 116 is drivingly connected to a differential side gear, a separate stub shaft, a separate coupling shaft, a second differential output shaft and/or a shaft that is formed as part of a differential side gear.

As it can be seen by referencing FIG. 2 of the disclosure, the vehicle 100 may further include a differential locking system 130. The differential locking system 130 includes a differential locking system 132 that drivingly connects the second axle half shaft 116 to the differential 112. The differential locking system 132 allows the vehicle 100 to experience an increase in traction by locking the wheels 120 and 126 on the axle system 110 together. This restricts the rotation of the wheels 120 and 126 to the same speed and prevents a differential action from occurring within the differential 112 as if they were mounted on a common shaft.

In order to selectively transition the differential locking system 132 between a first position (a disengaged position) and/or a second position (an engaged position), a pneumatic actuator 134 is used. The pneumatic actuator 134 is drivingly engaged with the differential locking system 132.

Pneumatically connected to the pneumatic actuator 134 is a differential lock pneumatic solenoid valve 136 having a first position (not shown) and a second position (not shown). According to an embodiment of the disclosure and as a non-limiting example, the differential lock pneumatic solenoid valve 136 complies with SAE J-1939, SAE J-1939-71, SAE J-1939-82, SAE J-1939-84 and/or ISO-11898 standards. SAE J-1939 is an internal vehicle communication network that interconnects the various components in the vehicle 100 allowing for communication and diagnostics among vehicle components. By making the differential lock pneumatic solenoid valve 136 compliant with SAE J-1939, SAE J-1939-71, SAE J-1939-82, SAE J-1939-84 and/or ISO-11898 standards, it allows the differential lock pneumatic solenoid valve 136 to send, receive and/or interpret messages formatted according to SAE J-1939 and/or SAE J-1939-71 standard protocol(s).

In pneumatic communication with the differential lock pneumatic solenoid valve 136 is compressed air supply 138 via a pneumatic solenoid air-line 140. The compressed air supply 138 provides the energy necessary to selectively transition the differential locking system 132 between a first disengaged position (not shown) and/or second engaged position (not shown).

When the differential lock pneumatic solenoid valve 136 is in its first position (not shown), the differential lock pneumatic solenoid valve 136 is closed. When the differential lock pneumatic solenoid valve 136 is closed, the compressed air from the compressed air supply 138 is blocked thereby preventing the actuation of the pneumatic actuator 134.

When the differential lock pneumatic solenoid valve 136 is in its second position (not shown), the differential lock pneumatic solenoid valve 136 is open. Once open, compressed air is allowed to flow from the compressed air supply 138, through the pneumatic solenoid air-line 140, to the differential lock pneumatic actuator 134. The compressed air then actuates the forward tandem axle pneumatic actuator 134 and engages the differential locking system 132 with the differential 112.

In order to instruct the differential lock pneumatic solenoid valve 136 to open or close, it is put into electrical communication with a pneumatic solenoid slave controller 142. According to one embodiment, the pneumatic solenoid slave controller 142 complies with SAE J-1939, SAE J-1939-71, SAE J-1939-82, SAE J-1939-84 and/or ISO-11898 standards. By making the pneumatic solenoid slave controller 142 compliant with SAE J-1939, SAE J-1939-71, SAE J-1939-82, SAE J-1939-84 and/or ISO-11898 standards, it allows the pneumatic solenoid slave controller 142 to send, receive and/or interpret messages formatted according to SAE J-1939 and/or SAE J-1939-71 standard protocol(s).

The pneumatic solenoid slave controller 142 is then in electrical communication with a second controller 144 via a pneumatic solenoid valve slave controller data-link 146. According to one embodiment of the disclosure and as a non-limiting example, the second controller 144 complies with SAE J-1939, SAE J-1939-71, SAE J-1939-82, SAE J-1939-84 and/or ISO-11898 standards. By making the second controller 144 compliant with SAE J-1939, SAE J-1939-71, SAE J-1939-82, SAE J-1939-84 and/or ISO-11898 standards, it allows the second controller 144 to send, receive and/or interpret messages formatted according to SAE J-1939 and/or SAE J-1939-71 standard protocol(s). As a non-limiting example, the second controller 144 may be a master controller, an instructing controller, a second slave controller or any other controller that is capable of sending, receiving and/or interpreting messages formatted according to SAE J-1939 and/or SAE J-1939-71 standard protocol(s).

Additionally, the second controller 144 is also in electrical communication with a vehicle communication bus 148 via a vehicle communication bus data-link 150. The vehicle communication bus 148 is a specialized internal communications network that interconnects the various components found in the vehicle 100. As a non-limiting example, the vehicle communication bus 148 may be a controller area network (CAN bus) that conforms to SAE J-1939, SAE J-1939-71, SAE J-1939-82, SAE J-1939-84 and/or ISO-11898 standards. The CAN bus is a type of vehicle communication bus 148 that is designed to allow the various microcontrollers and devices in the vehicle 100 to communicate with each other without the need for a host computer. By making the vehicle communication bus 148 compliant with SAE J-1939, SAE J-1939-71, SAE J-1939-82, SAE J-1939-84 and/or ISO-11898 standards, it allows the vehicle communication bus 148 to send, receive and/or interpret messages formatted according to SAE J-1939 and/or SAE J-1939-71 standard protocol(s).

When a pre-determined vehicle operating condition is detected, the second controller 144 sends an instruction over the vehicle communication bus 148 to instruct the differential lock pneumatic solenoid slave controller 142 to open the differential lock pneumatic solenoid valve 136. This allows the compressed air from the compressed air supply 138 to actuate the pneumatic actuator 134 thereby engaging the differential locking system 132 with the differential 112.

As previously discussed, by making the differential lock pneumatic solenoid valve 136, pneumatic solenoid slave controller 142, the second controller 144 and/or the vehicle communication bus 148 compliant with SAE J-1939, SAE J-1939-71, SAE J-1939-82, SAE J-1939-84 and/or ISO-11898 standards, the differential locking system 130 is able to be installed using the existing infrastructure within the vehicle 100. This means that the differential locking system 130 can be installed into the vehicle 100 without adding any additional or new components to the infrastructure of the vehicle 100. This in turn makes the system more cost efficient. Additionally, this allows the differential lock pneumatic solenoid valve 136 to be controlled by any controller in the data-link of the vehicle communication bus 148 that has adequate memory to accommodate the control logic to engage and disengage the differential locking system 132. Furthermore, this also gives the differential locking system 132 standardization and scalability, allowing the system 132 to be used across a wide range of platforms and allowing the differential locking system 132 to be compatible with the standard diagnostic tools used by field service personnel.

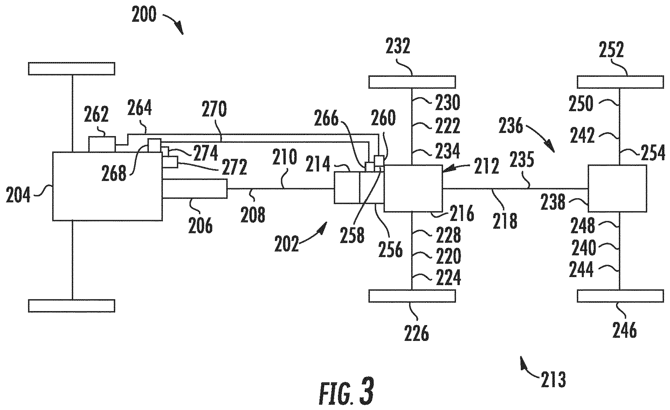

FIG. 3 is a schematic top plan view of a vehicle 200 having an inter-axle differential locking system 202 according to yet another embodiment of the disclosure. It is within the scope of this disclosure to include the use of the inter-axle differential locking system 202 illustrated in FIG. 3 in a vehicle (not shown) having the forward tandem axle differential locking system 56 and/or the rear tandem axle differential locking system 58 illustrated in FIG. 1. The vehicle 200 has an engine 204, which is drivingly connected to a transmission 206. A transmission output shaft 208 is then drivingly connected to the end of the transmission 206 opposite the engine 204. The transmission 206 is a power management system which provides controlled application of the rotational power provided by the engine 204 by means of a gearbox.

A first propeller shaft 210 extends from the transmission output shaft 208 and drivingly connects the transmission 206 to a forward tandem axle system 212 of a rear tandem axle system 213 having an inter-axle differential 214. The first propeller shaft 210 may be connected to the inter-axle differential 214 through one or more of the following components (not shown) a drive shaft, a stub shaft, a coupling shaft, a forward tandem axle system input shaft, a pinion gear shaft, an inter-axle differential pinion gear shaft and/or an inter-axle differential input shaft. The inter-axle differential 214 is device that divides the rotational power generated by the engine 204 between the axles in the vehicle 200. The rotational power is transmitted through the forward tandem axle system 212 as described in more detail below.

As illustrated in FIG. 3 of the disclosure, the inter-axle differential 214 is drivingly connected to a forward tandem axle differential 216 and a forward tandem axle output shaft 218. The forward tandem axle differential 216 is a set of gears that allows the outer drive wheel(s) of a wheeled vehicle 200 to rotate at a faster rate than the inner drive wheel(s).

The forward tandem axle system 212 further includes a first forward tandem axle half shaft 220 and a second forward tandem axle half shaft 222. The first forward tandem axle half shaft 220 extends substantially perpendicular to the first propeller shaft 210. A first end portion 224 of the first forward tandem axle half shaft 220 is drivingly connected to a first forward tandem axle wheel assembly 226 and a second end portion 228 of the first forward tandem axle half shaft 220 is drivingly connected to a side of the forward tandem axle differential 216. As a non-limiting example, the second end portion 228 of the first forward tandem axle half shaft 220 is drivingly connected to a forward tandem axle differential side gear, a separate stub shaft, a separate coupling shaft, a first forward tandem axle differential output shaft and/or a shaft that is formed as part of a forward tandem axle differential side gear.

Extending substantially perpendicular to the first propeller shaft 210 is the second forward tandem axle half shaft 222. A first end portion 230 of the second forward tandem axle half shaft 222 is drivingly connected to a second forward tandem axle wheel assembly 232. A second end 234 of the second forward tandem axle half shaft 222 is drivingly connected to a side of the forward tandem axle differential 216 opposite the first forward tandem axle half shaft 220. As a non-limiting example, the second end portion 234 of the second forward tandem axle half shaft 222 is drivingly connected to a forward tandem axle differential side gear, a separate stub shaft, a separate coupling shaft, a second forward tandem axle differential output shaft and/or a shaft that is formed as part of a forward tandem axle differential side gear.

One end of the forward tandem axle system output shaft 218 is drivingly connected to a side of the inter-axle differential 214 opposite the first propeller shaft 210. Drivingly connected to an end of the forward tandem axle output shaft 218, opposite the inter-axle differential 214, is a second propeller shaft 235. The second propeller shaft 235 extends from the forward tandem axle system 212 to a rear tandem axle system 236 of the tandem axle system 213 of the vehicle 200. An end of the second propeller shaft 235, opposite the forward tandem axle output shaft 218, is drivingly connected to a rear tandem axle differential 238 of the rear tandem axle system 236. It is within the scope of this disclosure and as a non-limiting example that the second propeller shaft 235 may be connected to the rear tandem axle differential 238 through one or more of the following (not shown) a drive shaft, a propeller shaft, a stub shaft, a coupling shaft, a rear tandem axle system input shaft, a pinion gear shaft and/or a rear tandem axle differential input shaft. The rear tandem axle differential 238 is a set of gears that allows the outer drive wheel(s) of a wheeled vehicle 200 to rotate at a faster rate than the inner drive wheel(s). The rotational power is transmitted through the rear tandem axle system 236 as described in more detail below.

The rear tandem axle system 236 further includes a first rear tandem axle half shaft 240 and a second rear tandem axle half shaft 242. The first rear tandem axle half shaft 240 extends substantially perpendicular to the second propeller shaft 235. A first end portion 244 of the first rear tandem axle half shaft 240 is drivingly connected to a first rear tandem axle wheel assembly 246 and a second end portion 248 of the first rear tandem axle half shaft 240 is drivingly connected to a side of the rear tandem axle differential 238. As a non-limiting example, the second end portion 248 of the first rear tandem axle half shaft 240 is drivingly connected to a rear tandem axle differential side gear, a separate stub shaft, a separate coupling shaft, a first rear tandem axle differential output shaft and/or a shaft that is formed as part of a rear tandem axle differential side gear.

Extending substantially perpendicular to the second propeller shaft 235 is the second rear tandem axle half shaft 242. A first end portion 250 of the second rear tandem axle half shaft 242 is drivingly connected to a second rear tandem axle wheel assembly 252. A second end portion 254 of the second rear tandem axle half shaft 242 is drivingly connected to a side of the rear tandem axle differential 238 opposite the first rear tandem axle half shaft 240. As a non-limiting example, the second end portion 254 of the second rear tandem axle half shaft 242 is drivingly connected to a rear tandem axle differential side gear, a separate stub shaft, a separate coupling shaft, a second rear tandem axle differential output shaft and/or a shaft that is formed as part of a rear tandem axle differential side gear.

As it can be seen by referencing FIG. 3 of the disclosure, the vehicle 200 may further include the inter-axle differential locking system 202. The inter- axle differential locking system 202 includes an inter-axle differential locking system 256 that drivingly connects the forward tandem axle system 212 to the rear tandem axle system 236. This prevents a differential action from occurring within the inter-axle differential 214, which allows power to transferred be equally to both the forward tandem axle system 212 and the rear tandem axle system 236 which results in an increase in vehicle traction.

In order to selectively transition the inter-axle differential locking system 256 between a first position (a disengaged portion) and/or a second position (an engaged position), an inter-axle differential pneumatic actuator 258 is used. The inter-axle differential pneumatic actuator 258 is drivingly engaged with the inter-axle differential locking system 256.

Pneumatically connected to the inter-axle differential pneumatic actuator 258 is a pneumatic solenoid valve 260 having a first position (not shown) and a second position (not shown). According to an embodiment of the disclosure and as a non-limiting example, the pneumatic solenoid valve 260 complies with SAE J-1939, SAE J-1939-71, SAE J-1939-82, SAE J-1939-84 and/or ISO-11898 standards. SAE J-1939 is an internal vehicle communication network that interconnects the various components in the vehicle 200 allowing for communication and diagnostics among vehicle components. By making the pneumatic solenoid valve 260 compliant with SAE J-1939, SAE J-1939-71, SAE J-1939-82, SAE J-1939-84 and/or ISO-11898 standards, it allows the pneumatic solenoid valve 260 to send, receive and/or interpret messages formatted according to SAE J-1939 and/or SAE J-1939-71 standard protocol(s).

In pneumatic communication with the pneumatic solenoid valve 260 is a compressed air supply 262 via a pneumatic solenoid air-line 264. The compressed air supply 262 provides the energy necessary to selectively transition the inter-axle differential locking system 256 between the first disengaged position (not shown) and/or the second engaged position (not shown).

When the pneumatic solenoid valve 260 is in a first position (not shown), the pneumatic solenoid valve 260 is closed. When the pneumatic solenoid valve 260 is closed, the compressed air from the compressed air supply 262 is blocked thereby preventing the actuation of the inter-axle differential pneumatic actuator 258.

When the pneumatic solenoid valve 260 is in a second position (not shown), the pneumatic solenoid valve 260 is open. Once open, compressed air is allowed to flow from the compressed air supply 262, through the pneumatic solenoid air-line 264, to the inter-axle differential pneumatic actuator 258. The compressed air then actuates the inter-axle differential pneumatic actuator 258 and engages the inter-axle differential locking system 256 with the inter-axle differential 214.

In order to instruct the inter-axle differential pneumatic solenoid valve 260 to open or close, it is put into electrical communication with a pneumatic solenoid slave controller 266. According to an embodiment of the disclosure and as a non-limiting example, the pneumatic solenoid slave controller 266 complies with SAE J-1939, SAE J-1939-71, SAE J-1939-82, SAE J-1939-84 and/or ISO-11898 standards. By making the pneumatic solenoid slave controller 266 compliant with SAE J-1939, SAE J-1939-71, SAE J-1939-82, SAE J-1939-84 and/or ISO-11898 standards, it allows the pneumatic solenoid slave controller 266 to send, receive and/or interpret messages formatted according to SAE J-1939 and/or SAE J-1939-71 standard protocol(s).

The pneumatic solenoid slave controller 266 is then in electrical communication with a second controller 268 via a pneumatic solenoid slave controller data-link 270. In accordance with an embodiment of the disclosure and as a non-limiting example, the second controller 268 complies with SAE J-1939, SAE J-1939-71, SAE J-1939-82, SAE J-1939-84 and/or ISO-11898 standards. By making the second controller 268 compliant with SAE J-1939, SAE J-1939-71, SAE J-1939-82, SAE J-1939-84 and/or ISO-11898 standards, it allows the second controller 268 to send, receive and/or interpret messages formatted according to SAE J-1939 and/or SAE J-1939-71 standard protocol(s). In a non-limiting example, the second controller 268 may be a master controller, an instructing controller, a second slave controller or any other controller that is capable of sending, receiving and/or interpreting messages formatted according to SAE J-1939 and/or SAE J-1939-71 standard protocol(s).

Additionally, the second controller 268 is also in electrical communication with a vehicle communication bus 272 via a vehicle communication bus data-link 274. The vehicle communication bus 272 is a specialized internal communications network that interconnects the various components found in the vehicle 200. As a non-limiting example, the vehicle communication bus 272 may be a controller area network (CAN bus) that conforms to SAE J-1939, SAE J-1939-71, SAE J-1939-82, SAE J-1939-84 and/or ISO-11898 standards. The CAN bus is a type of vehicle communication bus 272 that is designed to allow the various microcontrollers and devices in the vehicle 200 to communicate with each other without the need for a host computer. By making the vehicle communication bus 272 compliant with SAE J-1939, SAE J-1939-71, SAE J-1939-82, SAE J-1939-84 and/or ISO-11898 standards, it allows the vehicle communication bus 272 to send, receive and/or interpret messages formatted according to SAE J-1939 and/or SAE J-1939-71 standard protocol(s).

When a pre-determined vehicle operating condition is detected, the second controller 268 sends an instruction over the vehicle communication bus 272 to instruct the pneumatic solenoid slave controller 266 to open the pneumatic solenoid valve 260. This allows the compressed air from the compressed air supply 262 to actuate the inter-axle differential pneumatic actuator 258 thereby engaging the inter- axle differential locking system 256 with the inter-axle differential 214.

As previously discussed, by making the pneumatic solenoid valve 260, pneumatic solenoid slave controller 266, the second controller 268 and/or the vehicle communication bus 272 compliant with SAE J-1939, SAE J-1939-71, SAE J-1939-82, SAE J-1939-84 and/or ISO-11898 standards, the inter-axle differential locking system 202 is able to be installed using the existing infrastructure within the vehicle 200. This means that the inter-axle differential locking system 202 can be installed into the vehicle 200 without adding any additional or new components to the infrastructure of the vehicle 200. This in turn makes the system more cost efficient. Additionally, this allows the pneumatic solenoid valve 260 to be controlled by any controller in the data-link of the vehicle communication bus 272 that has adequate memory to accommodate the control logic to engage and disengage the inter-axle differential locking system 256. Furthermore, this also gives the inter-axle differential locking system 256 standardization and scalability, allowing the system 256 to be used across a wide range of platforms and allowing the differential locking system 256 to be compatible with the standard diagnostic tools used by field service personnel.

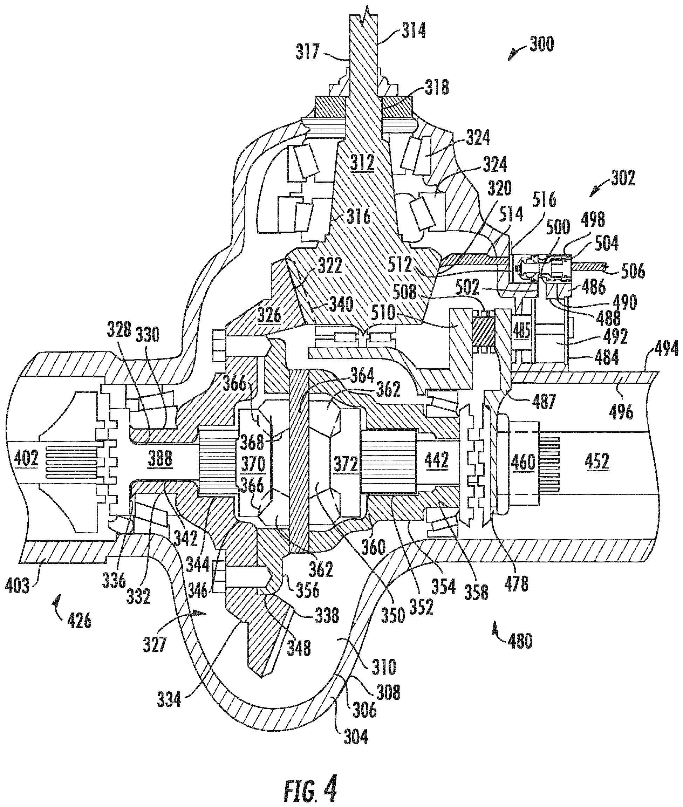

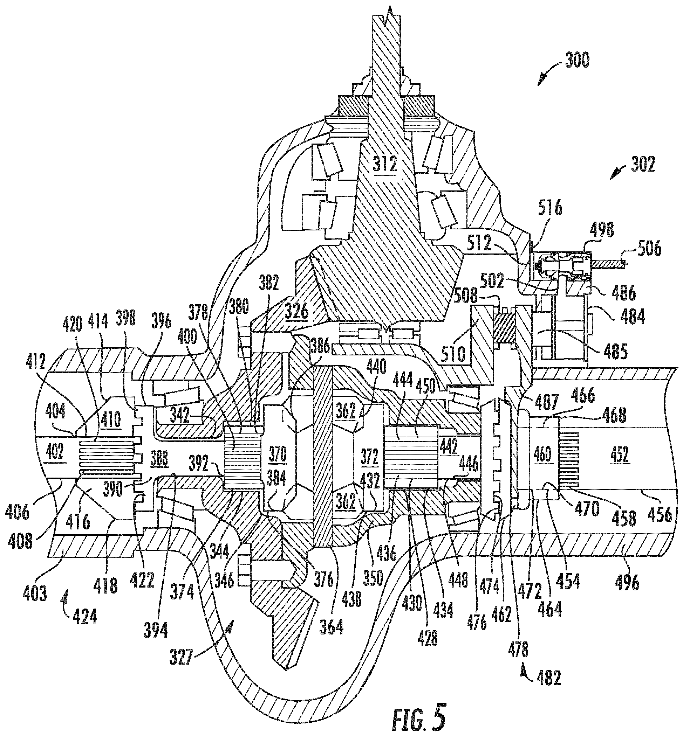

FIGS. 4 and 5 are a partial cut-away schematic side view of an axle system 300 having a differential locking system 302 according to an embodiment of the disclosure. As illustrated in FIGS. 4 and 5 of the disclosure the axle system 300 has a housing 304 having an inner surface 306 and an outer surface 308 defining a hollow portion 310 therein. It is within the scope of this disclosure that the housing 304 of the axle system 300 may be made of a single unitary piece or a plurality of pieces that are connected to one another by using one or more adhesives, one or more welds and/or one or more mechanical fasteners.

As best seen in FIG. 4 of the disclose, an input shaft 312 having a first end portion 314, a second end portion 316 and an outer surface 317 extends through an input shaft opening 318 extending from the inner surface 306 to an outer surface 308 of the housing 304 of the axle system 300. In accordance with e embodiment of the disclosure illustrated in FIG. 4 of the disclosure, at least a portion of the first end portion of the input shaft 312 is disposed outside the housing 304 of the axle system 300.

Integrally connected to at least a portion of the outer surface 317 of the second end portion 316 of the input shaft 312 is a pinion gear 320 having a plurality of pinion gear teeth 322. According to an embodiment of the disclosure and as a non-limiting example, the pinion gear 320 may be integrally formed as part of the second end portion of the input shaft 312. In accordance with an alternative embodiment of the disclosure and as a non-limiting example the pinion gear 320 may be integrally connected to at least a portion of the outer surface 317 of the second end portion 316 of the input shaft 312 by using one or more adhesives, one or more welds and/or one or more mechanical fasteners.

The input shaft is rotationally supported within the housing 304 of the axle system 300 by using one or more input shaft bearings 324. As best seen in FIG. 4 of the disclosure, the one or more input shaft bearings 324 are interposed between the outer surface 317 of the input shaft 312 and the inner surface 306 of the housing 304 of the axle system 300.

The pinion gear 320 is drivingly connected to a differential ring gear 326 of a differential assembly 327 having an inner surface 328, an outer surface 330, a first end portion 332, a second end portion 334, a first end 336 and a second end 338. Circumferentially extending from at least a portion of outer surface 330 of the second end portion 334 of the differential ring gear 326 is a plurality of ring gear teeth 340. The plurality of ring gear teeth 340 on the outer surface 330 of the differential ring gear 326 are complementary to and meshingly engaged with the plurality of pinion gear teeth 322 on the pinion gear 320.

As best seen in FIG. 4 of the disclosure, the inner surface 328 of the differential ring gear 326 has, in axial order, from the first end 336 to the second end 338 of the differential ring gear 326, a first receiving portion 342, a second receiving portion 344, a third receiving portion 346 and a fourth receiving portion 348. The first receiving portion 342 has an inner diameter D1, the second receiving portion 344 has an inner diameter ID2, the third receiving portion has an inner diameter ID3 and the fourth receiving portion has an inner diameter ID4. In accordance with the embodiment of the disclosure illustrated in FIG. 4 and as a non-limiting example, the inner diameter ID1 of the first receiving portion 342 of the differential ring gear 326 is less than the inner diameter ID2 of the second receiving portion 344 of the differential ring gear 326. Additionally, in accordance with the embodiment of the disclosure illustrated in FIG. 4 and as a non-limiting example, the inner diameter ID2 of the second receiving portion 344 of the differential ring gear 326 is less than the inner diameter ID3 of the third receiving portion 346 of the differential ring gear 326. Furthermore, in accordance with the embodiment of the disclosure illustrated in FIG. 4 and as a non-limiting example, the inner diameter ID3 of the third receiving portion 346 of the differential ring gear 326 is less than the inner diameter ID4 of the fourth receiving portion 348 of the differential ring gear 326. It is within the scope of this disclosure and as a non-limiting example that the first, second, third and fourth receiving portions 342, 344, 346 and 348 are substantially cylindrical in shape.

Extending co-axially with and integrally connected to at least a portion of the differential ring gear 326 is a differential case 350 having an inner surface 352, an outer surface 354, a first end portion 356 and second end portion 358. The inner surface 352 and the outer surface 354 of the differential case 350 defines a hollow portion 360 therein. As illustrated in FIG. 4 of the disclosure, at least a portion of the first end portion 356 of the differential case 350 is received within the fourth receiving portion 348 of the differential ring gear 326. It is within the scope of this disclosure and as a non-limiting example that the first end portion 356 of the differential case 350 may be integrally connected to at least a portion of the differential ring gear 326 by using one or more adhesives, one or more mechanical fasteners and/or one or more welds.

As illustrated in FIG. 4 of the disclosure and as a non-limiting example, the differential assembly 327 includes one or more pinion gears 362 disposed on a shaft 364 secured to the differential case 350. The one or more pinion gears 362 of the differential assembly 327 have a plurality of pinion gear teeth 366 circumferentially extending from at least a portion of an outer surface 368 of the one or more pinion gears 362.

Drivingly engaged with the one or more pinion gears 362 of the differential assembly 327 is a first side gear 370 and a second side gear 372. At least a portion of the one or more pinion gears 362, the first side gear 370 and the second side gear 372 are disposed within the differential ring gear 326 and/or the differential case 350 of the differential assembly 327 of the axle system 300. As best seen in FIG. 5 of the disclosure, the first side gear 370 has a first end portion 374, a second end portion 376, an inner surface 378 and an outer surface 380. Circumferentially extending along at least a portion of the inner surface 378 of the first side gear 370 is a plurality of axially extending first side gear splines 382.

As best seen in FIG. 5 of the disclosure, the second end portion 376 of the first side gear 370 has an increased diameter portion 384 circumferentially extending from at least a portion of the second end portion 376 of the first side gear 370 of the differential assembly 327. The increased diameter portion 384 of the first side gear 370 has an outermost diameter OD1 that is larger than an outermost diameter OD2 of the first end portion 374 of the first differential side gear 370. In accordance with the embodiment of the disclosure illustrated in FIG. 5 and as a non-limiting example, at least a portion of the first end portion 374 of the first side gear 370 is disposed within the second receiving portion 344 of the differential ring gear 326. Additionally, in accordance with the embodiment of the disclosure illustrated in FIG. 5 and as a non-limiting example, at least a portion of the increased diameter portion 384 of the first side gear 370 is disposed within the third receiving portion 346 of the differential ring gear 326. As a result, at least a portion of the first side gear 370 is disposed within the second and third receiving portions 344 and 346 of the differential ring gear 326 of the differential assembly 327.

Circumferentially extending along at least a portion of the outer surface 380 of the increased diameter portion 384 of the first side gear 370 is a plurality of first side gear teeth 386. The plurality of first side gear teeth 386 are complementary to and meshingly engaged with the plurality of pinion gear teeth 366 on the outer surface 368 of the one or more pinion gears 362.

Extending co-axially with and drivingly connected to at least a portion of the first side gear 370 of the differential assembly 327 is a first stub shaft 388 having a first end portion 390, a second end portion 392 and an outer surface 394. In accordance with the embodiment of the disclosure illustrated in FIGS. 4 and 5 and as a non-limiting example, at least a portion of the first stub shaft is disposed within the first receiving portion 342 of the differential ring gear 326.

Circumferentially extending from at least a portion of the first end portion 390 of the first stub shaft 388 is an increased diameter portion 396. A plurality of first shaft clutch teeth 398 circumferentially extend from at least a portion of the outer surface 394 of the increased diameter portion 396 of the first stub shaft 388. As best seen in FIG. 5 of the disclosure and as a non-limiting example, at least a portion of the increased diameter portion 396 of the first stub shaft 388 extends outside of the differential ring gear 326 of the differential assembly 327.

In accordance with the embodiment of the disclosure illustrated in FIG.5 and as a non-limiting example, a plurality of axially extending first stub shaft splines 400 circumferentially extend along at least a portion of the outer surface 394 of the second end portion 392 of the first stub shaft 388. The plurality of axially extending first stub shaft splines 400 are complementary to and meshingly engaged with the plurality of axially extending first side gear splines 382 on the inner surface 378 of the first side gear 370.

Extending co-axially with the first stub shaft 388 is a first axle half shaft 402 having a first end portion (not shown), a second end portion 404 and an outer surface 406. At least a portion of the second end portion 404 of the first axle half shaft 402 is rotationally connected to at least a portion of the first end portion 390 of the first stub shaft 388 of the axle system 300. Circumferentially extending from at least a portion of the second end portion 404 of the first axle half shaft 402 is a plurality of first axle half shaft splines 408.

As best seen in FIG. 5 of the disclosure, at least a portion of the first axle half shaft 402 and the first stub shaft 388 is disposed within a first axle half shaft housing 403. The first axle half shaft housing 403 extends axially outboard from at least a portion of the outer surface 308 of the housing 304 of the axle system 300. According to an embodiment of the disclosure and as a non-limiting example, the first axle half shaft housing 403 is formed as part of the housing 304 of the axle system 300. In accordance with an alternative embodiment of the disclosure and as a non-limiting example, an end of the first axle half shaft housing 403 is integrally connected to at least a portion of the outer surface 308 of the housing 304 of the axle system by using one or more adhesives, one or more mechanical fasteners, one or more welds and/or a threaded connection.

Disposed at least partially radially outboard from at least a portion of the second end portion 404 of the first axle half shaft 402 is an axle disconnect sliding collar 410 having a an inner surface 412, an outer surface 414, a first end portion 416 and a second end portion 418. Circumferentially extending along at least a portion of the inner surface 412 of the axle disconnect sliding collar 410 is a plurality of axially extending axle disconnect sliding collar splines 420. The plurality of axially extending axle disconnect sliding collar splines are complementary to and meshingly engaged with the plurality of first axle half shaft splines 408 on the outer surface 406 of the second end portion 404 of the first axle half shaft 402.

As best seen in FIG. 5 of the disclosure, circumferentially extending along at least a portion of the outer surface 414 of the second end portion 418 of the axle disconnect sliding collar 410 is a plurality of axle disconnect sliding collar clutch teeth 422. As a non-limiting example, the plurality of axle disconnect sliding collar clutch teeth 422 and the plurality of first stub shaft clutch teeth 398 are a plurality of face clutch teeth, a plurality of dog clutch teeth, or a friction clutch.

The plurality of axle disconnect sliding collar clutch teeth 422 are selectively engageable and/or disengageable with the plurality of first stub shaft clutch teeth 398. As a result, the axle disconnect sliding collar 410 is selectively engageable and/or disengageable with the first stub shaft 388 of the axle assembly 300. This allows the first axle half shaft 402 to be selectively connected and/or disconnected from driving engagement with the differential assembly 327 of the axle system 300. When the axle disconnect sliding collar 410 is in the first position 424 illustrated in FIG. 5 of the disclosure, the plurality of axle disconnect sliding collar clutch teeth 422 are meshingly engaged with the plurality of first stub shaft clutch teeth 398 thereby drivingly connecting the first axle half shaft 402 to the differential assembly 327. When the axle disconnect sliding collar 410 is in the second position 426 illustrated in FIG. 4 of the disclosure, the plurality of axle disconnect sliding collar clutch teeth 422 are not meshingly engaged with the plurality of first stub shaft clutch teeth 398 thereby disconnecting the first axle half shaft from driving engagement with the differential assembly 327.

In order to translate the axle disconnect sliding solar 410 between the first position 424 and the second position 426 an actuator assembly (not shown) is used to drive the axle disconnect sliding collar 410 into and out of engagement with the first stub shaft 388 of the axle system 300. It is within the scope of this disclosure that the actuator assembly (not shown) may be an actuator assembly according to an embodiment of the disclosure.

As previously discussed, the second side gear 372 is drivingly engaged with the one or more pinion gears 362 of the differential assembly 327. As best seen in FIG. 5 of the disclosure, the second side gear 372 has an inner surface 428, an outer surface 430, a first end portion 432 and a second end portion 434. Circumferentially extending along at least a portion of the inner surface 428 of the second side gear 372 is a plurality of axially extending second side gear splines 436.

As best seen in FIG. 5 of the disclosure, the first end portion 432 of the second side gear 372 has an increased diameter portion 438 circumferentially extending from at least a portion of the first end portion 432 of the second side gear 372 of the differential assembly 327. The increased diameter portion 438 of the second side gear 372 has an outermost diameter OD3 that is larger than an outermost diameter OD4 of the second end portion 434 of the second differential side gear 372. Circumferentially extending along at least a portion of the outer surface 430 of the increased diameter portion 438 of the second side gear 372 is a plurality of second side gear teeth 440. The plurality of second side gear teeth 440 are complementary to and meshingly engaged with the plurality of pinion gear teeth 366 on the outer surface 368 of the one or more pinion gears 362.

Extending co-axially with and drivingly connected to at least a portion of the second side gear 372 of the differential assembly 327 is a second stub shaft 442 having a first end portion 444, a second end portion 446 and an outer surface 448. Circumferentially extending along at least a portion of the first end portion 444 of the second stub shaft 442 is a plurality of axially extending second stub shaft splines 450. The plurality of axially extending second stub shaft splines 450 are complementary to and meshingly engaged with the plurality of axially extending second side gear splines 436 on the inner surface 428 of the second side gear 472 of the differential assembly 427.

A second axle half shaft 452 having a first end portion 454, a second end portion (not shown) and an outer surface 456 extends co-axially with the second stub shaft 442 of the axle system 300. In accordance with the embodiment of the disclosure illustrated in FIG. 5 and as a non-limiting example, at least a portion of the first end portion 454 of the second axle half shaft 452 is rotatively connected to at least a portion of the second end portion 446 of the second stub shaft 442. Circumferentially extending along at least a portion of the outer surface 456 of the first end portion 454 of the second axle half shaft 452 is a plurality of axially extending second axle half shaft splines 458.

Extending co-axially with and slidingly engaged with the first axle half shaft 452 is a differential locking system sliding collar 460 having a first end portion 462, a second end portion 464, an inner surface 466 and an outer surface 468. The inner surface 466 and the outer surface 468 of the differential locking system sliding collar 460 defines a hollow portion 470 therein. Circumferentially extending from the inner surface 466 of the differential locking system sliding collar 460 is a plurality of splines 472 that are complementary to and meshingly engaged with the plurality of second axle half shaft splines 458 on the outer surface 456 of the first end portion 454 of the first axle half shaft 452.

Circumferentially extending from at least a portion of the outer surface 468 of the first end portion 462 of differential locking system sliding collar 460 is a plurality of differential locking system sliding collar clutch teeth 474. The plurality of differential locking system sliding collar clutch teeth 474 are complementary to and selectively engageable and/or disengageable with a plurality of differential case clutch teeth 476 circumferentially extending from at least a portion of the outer surface 354 of the second end portion 358 of the differential case 350. As a non-limiting example, the plurality of differential case clutch teeth 476 and the plurality of differential locking system sliding collar clutch teeth 474 are a plurality of face clutch teeth, a plurality of dog clutch teeth, or a friction clutch.

According to an embodiment of the disclosure illustrated in FIG. 5 and as a non-limiting example, the differential locking system sliding collar 460 has a groove 478 circumferentially extending along at least a portion of the outer surface of the differential locking system sliding collar 460.

In order to transition the differential locking system sliding collar 460 from a first position 480 illustrated in FIG. 4 to a second position 482 illustrated in FIG. 5, an actuator 484 is used. The actuator 484 is disposed radially outward from the second axle half shaft 452 and has an axis that is substantially parallel to the second axle half shaft 452. As a non-limiting example, the actuator 484 is a piston, a pneumatic piston or a pneumatic actuator. The actuator 484 is drivingly engaged with a shift shaft 485, which in turn is drivingly engaged with an end of a shift fork 487. An end of the shift fork 487 opposite the shift shaft 485 is in driving engagement with at least a portion of the differential locking system sliding collar 460. It is within the scope of this disclosure that at least a portion of the end of the shift fork 487 opposite the shift shaft 485 may be disposed within the groove 478 on the outer surface 464 of the differential locking system sliding collar 460

According to the embodiment of the disclosure illustrated in FIG. 4 and as a non-limiting example, at least a portion of the actuator 484 is housed within a protruding portion 486 extending from at least a portion of the outer surface 308 of the housing 304 of the axle system 300. The protruding portion 486 of the housing 304 has an inner surface 488 and an outer surface 490 defining a hollow portion 492 therein. As illustrated in FIG. 4 of the disclosure and as a non-limiting example, at least a portion of the actuator 484 is housed within the hollow portion 492 of the protruding portion 486 of the housing 304 of the axle system 300.

As illustrated in FIG. 4 of the disclosure, at least a portion of the protruding portion 486 is disposed proximate to an outer surface 494 of a second axle half shaft housing 496. According to an embodiment of the disclosure and as a non-limiting example, at least a portion of the second axle half shaft housing 496 may form a portion of the protruding portion 486 of the housing 304 of the axle system 300. In accordance with an alternative embodiment of the disclosure and as a non-limiting example, at least a portion of the protruding portion 486 may be integrally connected to at least a portion of the outer surface 494 of the second axle half shaft housing 496 by using one or more adhesives, one or more mechanical fasteners, one or more welds and/or a threaded connection.

As best seen in FIG. 4 of the disclosure, at least a portion of the second axle half shaft 452 and the second stub shaft 442 is disposed within the second axle half shaft housing 496. The second axle half shaft housing 496 extends axially outboard from at least a portion of the outer surface 308 of the housing 304 of the axle system 300. According to an embodiment of the disclosure and as a non-limiting example, the second axle half shaft housing 496 is formed as part of the housing 304 of the axle system 300. In accordance with an alternative embodiment of the disclosure and as a non-limiting example, an end of the first axle half shaft housing 496 is integrally connected to at least a portion of the outer surface 308 of the housing 304 opposite the first axle half shaft housing 403. As a non-limiting example, the second axle half shaft housing 496 may be integrally connected to at least a portion of the outer surface of the housing 304 of the axle system 300 by using one or more adhesives, one or more mechanical fasteners, one or more welds and/or a threaded connection.

In order to activate the actuator 484 and drive the differential locking system sliding collar 460 from the first position 480 illustrated in FIG. 4 to the second position 482 illustrated in FIG. 5, the actuator 484 is pneumatically connected to a differential lock pneumatic solenoid valve 498. As best seen in FIG. 4 and as a non-limiting example, the differential lock pneumatic solenoid valve 498 has an actuator aperture 500 that is in pneumatic communication with the actuator 484 via an opening 502 extending from the inner surface 488 to the outer surface 490 of the protruding portion 486 of the housing 304. It is within the scope of this disclosure and as a non-limiting example that the differential lock pneumatic solenoid valve 484 complies with SAE J-1939, SAE J-1939-71, SAE J-1939-82, SAE J-1939-84 and/or ISO-11898 standards. SAE J-1939 is an internal vehicle communication network that interconnects the various components in the vehicle (not shown) allowing for communication and diagnostics among vehicle components. By making the differential lock pneumatic solenoid valve 484 compliant with SAE J-1939, SAE J-1939-71, SAE J-1939-82, SAE J-1939-84 and/or ISO-11898 standards, it allows the differential lock pneumatic solenoid valve 338 to send, receive and/or interpret messages formatted according to SAE J-1939 and/or SAE J-1939-71 standard protocol(s).

According to the embodiment of the disclosure illustrated in FIG. 4, at least a portion of an outer surface 500 of the differential lock pneumatic solenoid valve 498 is integrally connected to at least a portion of the outer surface 490 of the protruding portion 486 of the housing 304 of the axle system 300. It is within the scope of this disclosure and as a non-limiting example that the outer surface 500 of the differential lock pneumatic solenoid valve 498 may be integrally connected to the outer surface 490 of the protruding portion 486 of the housing 304 by using one or more adhesives, one or more mechanical fasteners and/or one or more welds.

In pneumatic communication with the differential lock pneumatic solenoid valve 484 is a compress air supply (not shown) via a pneumatic solenoid air-line 506. The compressed air supply (not shown) provides the energy necessary to selectively engage and/or disengage the differential locking system sliding collar 460 of the differential locking system 302 with the plurality of differential case clutch teeth 476 on the second end portion 358 of the differential case 350.

When the differential locking system sliding collar 460 is in the first position 480 illustrated in FIG. 4, the differential lock pneumatic solenoid valve 484 is in a closed position. When the differential lock pneumatic solenoid valve 484 is in the closed position, the compressed air from the compressed air supply (not shown) is blocked thereby preventing the actuator 484 from transitioning the differential locking system sliding collar 460 from the first position 480 illustrated in FIG. 4 to the second position 482 illustrated in FIG. 5 of the disclosure.

When the differential locking system sliding collar 460 is in the second position 482 illustrated in FIG. 5, the differential lock pneumatic solenoid valve 484 is in an open position. Once open, the compressed air from the compressed air supply (not shown) is allowed to flow through the differential lock pneumatic solenoid valve 484 to the actuator 484 thereby transitioning the differential locking system sliding collar 460 from the first position 480 illustrated in FIG. 4 to the second position 482 illustrated in FIG. 5 of the disclosure.

In accordance with the embodiment of the disclosure illustrated in FIGS. 4 and 5 and as a non-limiting example, the differential locking system 302 further includes the use of a return spring 508 disposed radially outboard from at least a portion of the shift shaft 485. As illustrated in FIGS. 4 and 5 of the disclosure, the return spring 508 is interposed between the shift fork 487 and a flange portion 510 supporting an end of the shift shaft 485 opposite the actuator 484. According to an embodiment of the disclosure and as a non-limiting example, the flange portion 510 may be integrally formed as part of the inner surface 306 of the housing 304 of the axle system 300. In accordance with an alternative embodiment of the disclosure and as a non-limiting example, at least a portion of the flange portion 510 may be integrally connected to at least a portion of the inner surface 306 of the housing 304 by using one or more adhesives, one or more mechanical fasteners and/or one or more welds.

When the differential lock pneumatic solenoid valve 498 is open, the actuator 484 drives the shift fork 487 and transitions the differential locking system sliding collar 460 from the first position 480 illustrated in FIG. 4 to the second position 482 illustrated in FIG. 5 thereby loading the return spring 508 with energy. When the differential lock pneumatic solenoid valve 498 is closed, the compressed air from the compressed air supply (not shown) is prevented from acting on the actuator 484. The energy loaded within the return spring 510 is then released driving the shift fork 487 and the differential locking system sliding collar 460 from the second position 482 illustrated in FIG. 5 to the first position 480 illustrated in FIG. 4 of the disclosure.

In order to instruct the differential lock pneumatic solenoid valve 498 to transition between the open and/or the closed position, the differential lock pneumatic solenoid valve 498 is put into electrical communication with a pneumatic solenoid valve slave controller 512. As a non-limiting example, the pneumatic solenoid valve slave controller 512 complies with SAE J-1939, SAE J-1939-71, SAE J-1939-82, SAE J-1939-84 and/or ISO-11898 standards. By making the pneumatic solenoid valve slave controller 512 compliant with SAE J-1939, SAE J-1939-71, SAE J-1939-82, SAE J-1939-84 and/or ISO-11898 standards, it allows the pneumatic solenoid valve slave controller 512 to send, receive and/or interpret messages formatted according to SAE J-1939 and/or SAE J-1939-71 standard protocol(s).

As illustrated in FIG. 4 of the disclosure and as a non-limiting example, the pneumatic solenoid valve slave controller 512 is interposed between the differential lock pneumatic solenoid valve 498 and the outer surface 308 of the housing 304 of the axle system 300. At least a portion of an outer surface 514 of the pneumatic solenoid valve slave controller 512 may be integrally connected to at least a portion of the outer surface 308 of the housing 304, the outer surface 490 of the protruding portion 486 and/or the outer surface 504 of the differential lock pneumatic solenoid valve 498. As a non-limiting example, the outer surface of the 514 of the pneumatic solenoid valve slave controller 512 may be integrally connected to the outer surfaces 308, 490 and/or 504 of the housing 304, the protruding portion 486 and/or the differential lock pneumatic solenoid valve 498 by using one or more adhesives, one or more mechanical fasteners and/or one or more welds. It is within the scope of this disclosure that the differential lock pneumatic solenoid valve 498 and the pneumatic solenoid valve slave controller 512 may be connected as a single component within the axle system 300.

According to an embodiment of the disclosure and as a non-limiting example, the pneumatic solenoid valve slave controller 512 may be a multi-layered board. It is within the scope of this disclosure that the pneumatic solenoid valve slave controller 512 may further include one or more sensors (not shown). As a non-limiting example, the one or more sensors (not shown) in electrical communication with the pneumatic solenoid valve slave controller 512 are one or more pressure sensors, one or more temperature sensors and/or one or more position sensors. The one or more temperature sensors (not shown) are configured to determine a temperature within the actuator 484 and/or the differential lock pneumatic solenoid valve 498. The one or more pressure sensors (not shown) are configured to determine an amount of air pressure within the actuator 484 and/or the differential lock pneumatic solenoid valve 498. The one or more position sensors (not shown) may be configured to determine whether the differential locking system 302 is in the first position 480 illustrated in FIG. 4 or in the second position 482 illustrated in FIG. 5 of the disclosure. Additionally, it is within the scope of this disclosure that the one or more pressure sensors (not shown) may be configured to determine whether the differential lock pneumatic solenoid valve 498 is open or closed.

The pneumatic solenoid valve slave controller 512 is then in electrical communication with a vehicle communication bus (not shown) through a second controller (not shown) via a pneumatic solenoid slave controller data-link 516. As a non-limiting example, the second controller (not shown) complies with SAE J-1939, SAE J-1939-71, SAE J-1939-82, SAE J-1939-84 and/or ISO-11898 standards. By making the second controller (not shown) compliant with SAE J-1939, SAE J-1939-71, SAE J-1939-82, SAE J-1939-84 and/or ISO-11898 standards, it allows the second controller (not shown) to send, receive and/or interpret messages formatted according to SAE J-1939 and/or SAE J-1939-71 standard protocol(s). It is within the scope of this disclosure and as a non-limiting example that the second controller (not shown) may be a master controller, an instructing controller, a second slave controller or any other controller that is capable of sending, receiving and/or interpreting messages formatted according to SAE J-1939 and/or SAE J-1939-71 standard protocol(s).

As previously discussed, the vehicle communication bus (not shown) is a specialized internal communications network that interconnects the various components found in the vehicle (not shown). In a non-limiting example, the vehicle communication bus (not shown) may be a controller area network (CAN bus) that conforms to SAE J-1939, SAE J-1939-71, SAE J-1939-82, SAE J-1939-84 and/or ISO-11898 standards. As previously discussed, the CAN bus is a type of vehicle communication bus (not shown) that is designed to allow the various microcontrollers and devices in the vehicle (not shown) to communicate with each other without the need for a host computer. By making the vehicle communication bus (not shown) compliant with SAE J-1939, SAE J-1939-71, SAE J-1939-82, SAE J-1939-84 and/or ISO-11898 standards, it allows the vehicle communication bus (not shown) to send, receive and/or interpret messages formatted according to SAE J-1939 and/or SAE J-1939-71 standard protocol(s).

Once a pre-determined vehicle operating condition is detected or an instruction is received from a user, the second controller (not shown) sends an instruction over the vehicle communication bus (not shown) to instruct the differential lock pneumatic solenoid valve slave controller 512 to open the differential lock pneumatic solenoid valve 498. This allows the compressed air from the compressed air supply (not shown) to actuate the actuator 484 thereby engaging the differential locking system 302 with the plurality of differential case clutch teeth 476 on the outer surface 354 of the second end portion 358 of the differential case 350.

By making the differential lock pneumatic solenoid valve 498, pneumatic solenoid valve slave controller 512, the second controller (not shown) and/or the vehicle communication bus (not shown) compliant with SAE J-1939, SAE J-1939-71, SAE J-1939-82, SAE J-1939-84 and/or ISO-11898 standards, the differential locking system 302 is able to be installed using the existing infrastructure within the vehicle (not shown). This means that the differential locking system 302 may be installed into the vehicle (not shown) without adding any additional or new components to the infrastructure of the vehicle (not shown). As a result, this makes the axle system 300 more cost efficient. Additionally, this has the advantage of allowing the differential lock pneumatic solenoid valve 498 to be controlled by any controller in the data-link of the vehicle communication bus (not shown) that has adequate memory to accommodate the control logic needed to transition the differential locking system 302 from the first position 480 to the second position 482. Furthermore, this also gives the differential locking system 302 standardization and scalability, thereby allowing the differential locking system 302 to be used across a wide range of platforms and allowing the system 302 to be compatible with the standard diagnostic tools used by field service personnel.

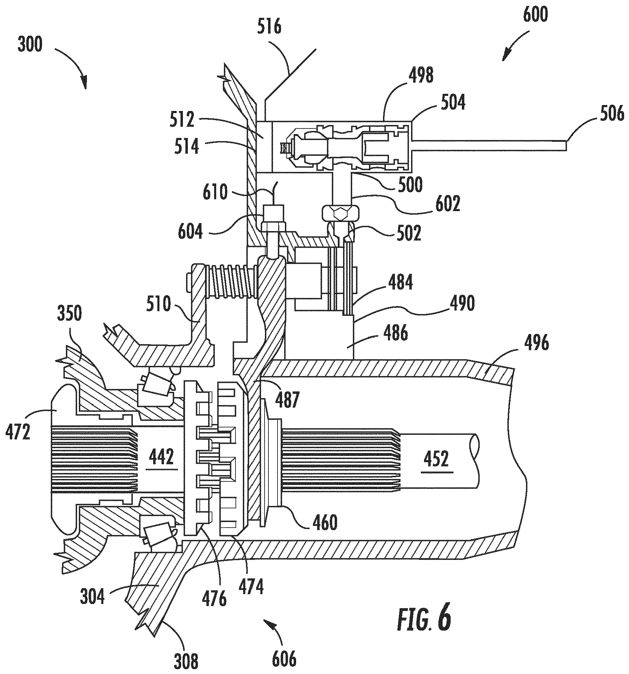

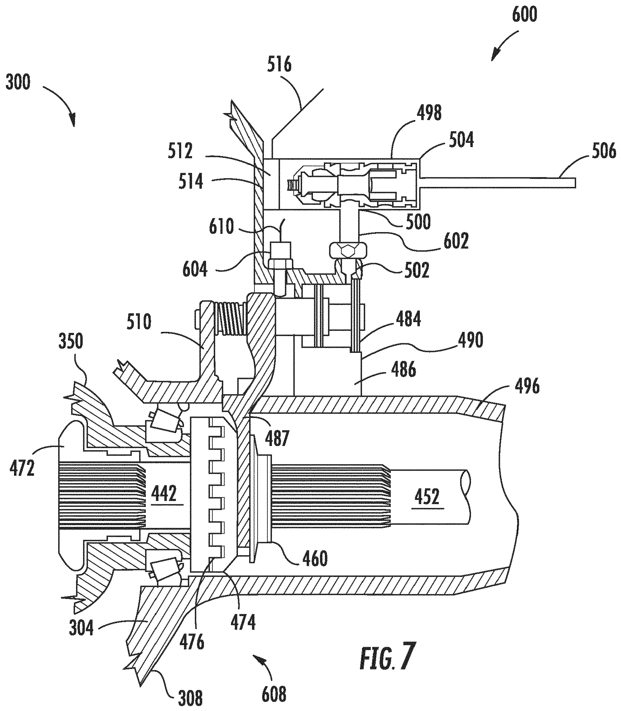

FIGS. 6 and 7 are a partial cut-away schematic side view of a differential locking system 600 according to an alternative embodiment of the disclosure. The differential locking system 600 illustrated in FIGS. 6 and 7 is the same as the differential locking system 302 illustrated in FIGS. 4 and 5, except where specifically noted below. As illustrated in FIGS. 6 and 7 of the disclosure, the differential lock pneumatic solenoid valve 498 and the pneumatic solenoid valve slave controller 512 are not integrally connected to the outer surface 490 of the protruding portion 486 of the housing 304 of the axle system 300.

In accordance with the embodiment of the disclosure illustrated in FIGS. 6 and 7 of the disclosure and as a non-limiting example, the differential lock pneumatic solenoid valve 498 and the pneumatic solenoid valve slave controller 512 are packaged as a signal component and integrally connected to at least a portion of the outer surface 308 of the housing 304. As illustrated in FIGS. 6 and 7 of the disclosure, the differential lock pneumatic solenoid valve 498 and the pneumatic solenoid valve slave controller 512 are disposed outboard from the outer surface 490 of the protruding portion 486 of the housing 304 of the axle system 300. It is within the scope of this disclosure and as a non-limiting example that the differential lock pneumatic solenoid valve 498 and the pneumatic solenoid valve slave controller 512 are connected to the outer surface 308 of the housing 304 by using one or more adhesives, one or more mechanical fasteners and/or one or more welds.

According to the embodiment of the disclosure illustrated in FIGS. 6 and 7, the differential lock pneumatic solenoid valve 498 is in pneumatic communication with the actuator 484 via an actuator input air-line 602. An end of the actuator input air-line 602 is connected to and is in pneumatic communication with the actuator aperture 500 of the differential lock pneumatic solenoid valve 498. An end of the actuator input air-line 602, opposite the differential lock pneumatic solenoid valve 498, is in pneumatic communication with the actuator 484 via the opening 502 in the protruding portion 486 of the housing 304 of the axle system 300.

It is within the scope of this disclosure that the differential locking system 600 may further include the use of an indicator switch 604 in order to determine when the differential locking system 600 is in a first disengaged position 606 illustrated in FIG. 6 or in a second engaged position 608 illustrated in FIG. 7. When the differential locking system sliding collar 460 is successfully engaged with the plurality of differential case clutch teeth 476, the indicator switch 604 sends an electrical signal over an indicator switch data-link 610 to an indicator light (not shown) and/or an audible signaling device (not shown) in the cab of the vehicle (not shown). The indicator light (not shown) and/or the audible signaling device (not shown) informs the operator of the vehicle (not shown) that the differential locking system 600 is successfully engaged.

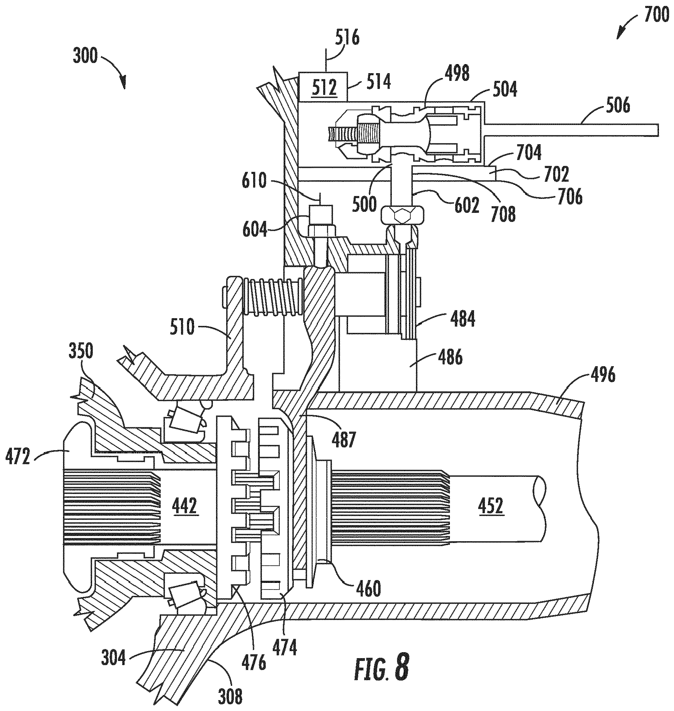

FIG. 8 is a partial cut-away schematic side view of a differential locking system 700 according to another embodiment of the disclosure. The differential locking system 700 illustrated in FIG. 8 of the disclosure is the same as the differential locking systems 302 and 600 illustrated in FIGS. 4-7, except where specifically noted below. As illustrated in FIG. 8 of the disclosure and as a non-limiting example, the axle system 300 includes a differential locking system flange portion 702 having a first side 704 and a second side 706. The differential locking system flange portion 702 extends outboard from at least a portion of the outer surface 308 of the housing 304 at a location outboard from at least a portion of the protruding portion 486 of the housing 304 and the second axle half shaft housing 496 of the axle system 300. According to an embodiment of the disclosure and as a non-limiting example, the differential locking system flange portion 702 may be integrally formed as part of the outer surface 308 of the housing 304 of the axle system 300. In accordance with an alternative embodiment of the disclosure and as a non-limiting example, the differential locking system flange portion 702 may be integrally connected to at least a portion of the outer surface 308 of the housing 304 by using one or more adhesives, one or more mechanical fasteners and/or one or more welds.

As illustrated in FIG. 8, at least a portion of the outer surface 504 of the differential lock pneumatic solenoid valve 498 is integrally connected to at least a portion of the outer surface 308 of the housing 304 and/or to at least a portion of the first side 704 of the differential locking system flange portion 702. It is within the scope of this disclosure and as a non-limiting example, that the differential lock pneumatic solenoid valve 498 may be integrally connected to the outer surface 308 of the housing 304 and/or to the first side 704 of the differential locking system flange portion 702 by using one or more adhesives, one or more mechanical fasteners and/or one or more welds.

In accordance with the embodiment of the disclosure illustrated in FIG. 8 and as a non-limiting example, the differential locking system flange portion 702 of the housing 304 has an opening 708 extending from the first side 704 to the second side 706 of the differential locking system flange portion 702. The opening 708 in the differential locking system flange portion 702 is of a size and shape to receive at least a portion of the actuator input air-line 602 of the differential locking system 700.

At least a portion of the outer surface 514 of the pneumatic solenoid valve slave controller 512 is integrally connected to at least a portion of the outer surface 308 of the housing 304 and/or to at least a portion of the outer surface 504 of the differential lock pneumatic solenoid valve 498. As a non-limiting example, that the outer surface 514 of the pneumatic solenoid valve slave controller 512 may be integrally connected to the outer surface 308 of the housing 304 and/or to the outer surface 504 of the differential lock pneumatic solenoid valve 498 by using one or more adhesives, one or more mechanical fasteners and/or one or more welds.

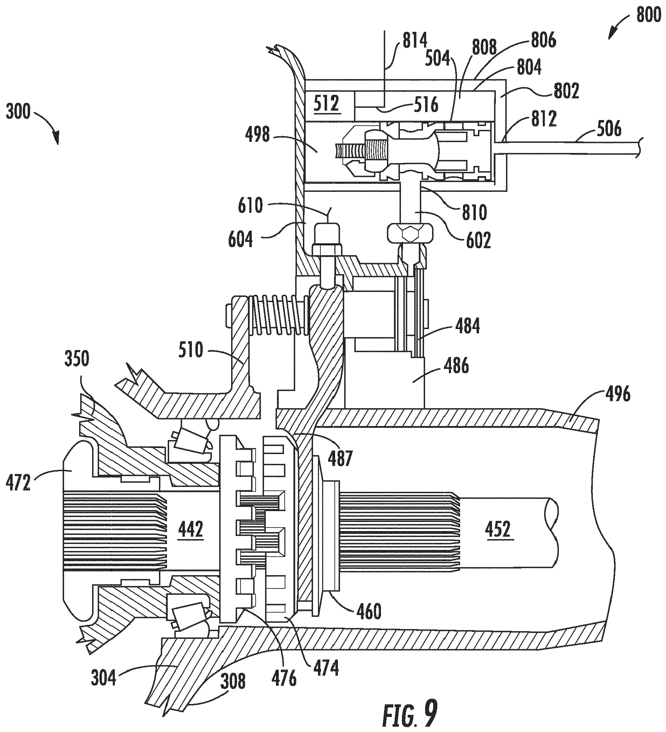

FIG. 9 is a partial cut-away schematic side view of a differential locking system 800 according to yet another embodiment of the disclosure. The differential locking system 800 illustrated in FIG. 9 is the same as the differential locking systems 700 illustrated in FIG. 8, except where specifically noted below. As illustrated in FIG. 9 of the disclosure, the differential locking system 800 includes a differential locking system housing 802 having an inner surface 804 an outer surface 806 defining a hollow portion 808 therein. The hollow portion 808 of the differential locking system housing 802 is of a size and shape to receive and/or retain at least a portion of the differential lock pneumatic solenoid valve 498 and the pneumatic solenoid valve slave controller 512.

In accordance with the embodiment of the disclosure illustrated in FIG. 9 and as a non-limiting example, the differential locking system housing 802 extends outboard from at least a portion of the outer surface 308 of the housing 304 of the axle system 300. The differential locking system housing 802 is disposed outboard from at least a portion of the protruding portion 486 of the housing 304 and the second axle half shaft housing 496 of the axle system 300. According to an embodiment of the disclosure and as a non-limiting example, the differential locking system housing 802 may be integrally formed as part of the housing 304 of the axle system 300. In accordance with an alternative embodiment of the disclosure and as a non-limiting example, the outer surface 806 of the differential locking system housing 802 may be integrally connected to at least a portion of the outer surface 308 of the housing 304 by using one or more adhesives, one or more mechanical fasteners and/or one or more welds.

As illustrated in FIG. 9 of the disclosure and as a non-limiting example, the differential locking system housing 802 has a first opening 810, a second opening 812 and a third opening 814 extending from the inner surface 804 to the outer surface 806 of the differential locking system housing 802. The first opening 810 in the differential locking system housing 802 is of a size and shape to receive at least a portion of the actuator input air-line 602 and the second opening 812 is of a size and shape to receive at least a portion of the pneumatic solenoid air-line 506. The third opening 814 in the differential locking system housing 802 is of a size and shape to receive at least a portion of the pneumatic solenoid slave controller data-link 516.

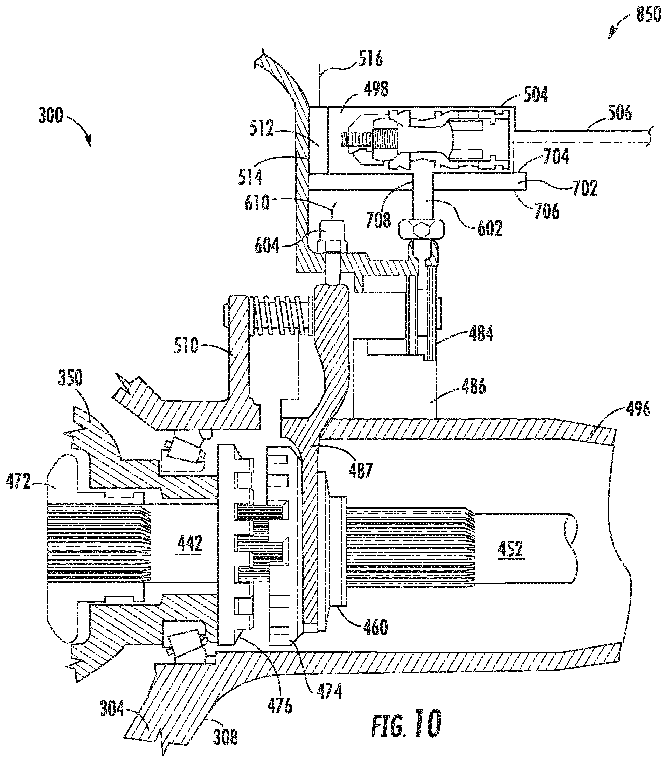

FIG. 10 is a partial cut-away schematic side view of a differential locking system 850 according to still yet another embodiment of the disclosure. The differential locking system 850 illustrated in FIG. 10 is the same as the differential locking systems 302, 600 and 700, except where specifically noted below. As illustrated in FIG. 10 of the disclosure, the differential locking system 850 includes the differential locking system flange portion 702 illustrated in FIG. 8. In accordance with this embodiment of the disclosure and as a non-limiting example, at least a portion of the outer surface 514 of the pneumatic solenoid valve slave controller 512 and the outer surface 504 of the differential lock pneumatic solenoid valve 498 are integrally connected to at least a portion of the first side 704 of the differential locking system flange portion 702. As a non-limiting example, the outer surfaces 504 and 514 of the differential lock pneumatic solenoid valve 498 and the pneumatic solenoid valve slave controller 512 may be integrally connected to the first side 704 of the differential locking system flange portion 702 by using one or more adhesives, one or more mechanical fasteners and/or one or more welds.

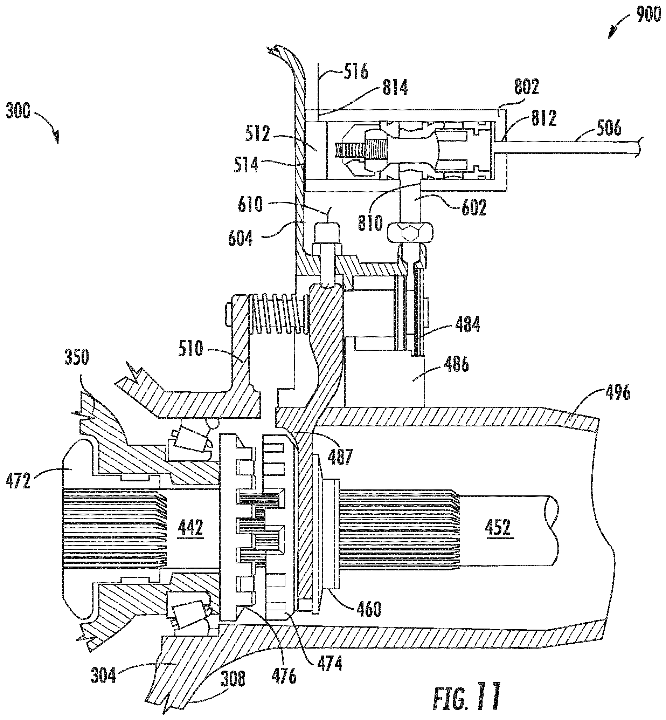

FIG. 11 is a partial cut-away schematic side view of a differential locking system 900 according to still a further embodiment of the disclosure. The differential locking system 900 illustrated in FIG. 11 is the same as the differential locking systems 302, 600 and 800, except where specifically noted below. In accordance with the embodiment of the disclosure illustrated in FIG. 11 and as a non-limiting example, the differential locking system 900 includes the differential locking system housing 802.

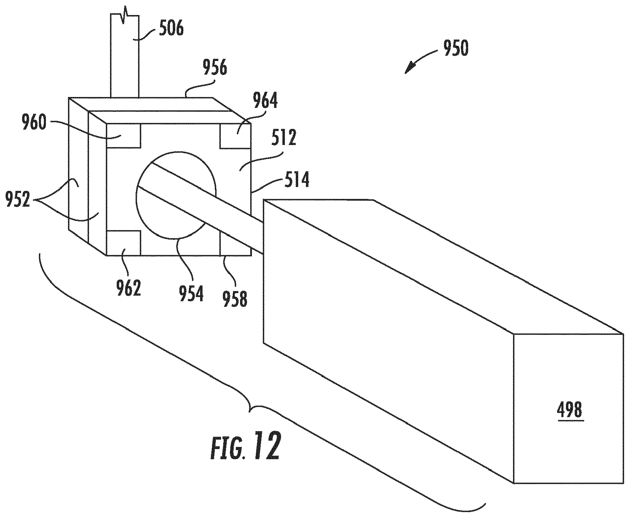

FIG 12 is a schematic exploded view of a differential lock pneumatic solenoid valve and the pneumatic solenoid slave controller assembly 950 according to an embodiment of the disclosure. In accordance with the embodiment of the disclosure illustrated in FIG. 12 and as a non-limiting example, the pneumatic solenoid valve slave controller 512 is a multi-layered board having a plurality of layers 952. Additionally, in accordance with the embodiment of the disclosure illustrated in FIG. 12 the pneumatic solenoid valve slave controller 512 has a hollow interior portion 954 extending from a first side 956 to a second side 958 of the pneumatic solenoid valve slave controller 512. The hollow interior portion 954 of the pneumatic solenoid valve slave controller 512 is of a size and shape to receive and/or retain at least a portion of the pneumatic solenoid air-line 506.

As illustrated in FIG. 12 of the disclosure and as a non-limiting example, the pneumatic solenoid valve slave controller 512 may include one or more pressure sensors 960, one or more temperature sensors 962 and/or one or more position sensors 964. The one or more pressure sensors 960, one or more temperature sensors 962 and/or one or more position sensors 964 are in electrical communication with and connected to at least a portion of the outer surface 514 of the pneumatic solenoid valve slave controller 512.

It is within the scope of this disclosure that the embodiments of the disclosure illustrated in FIGS. 4-12 may be combined with one another to form a differential locking system according to an embodiment of the disclosure.

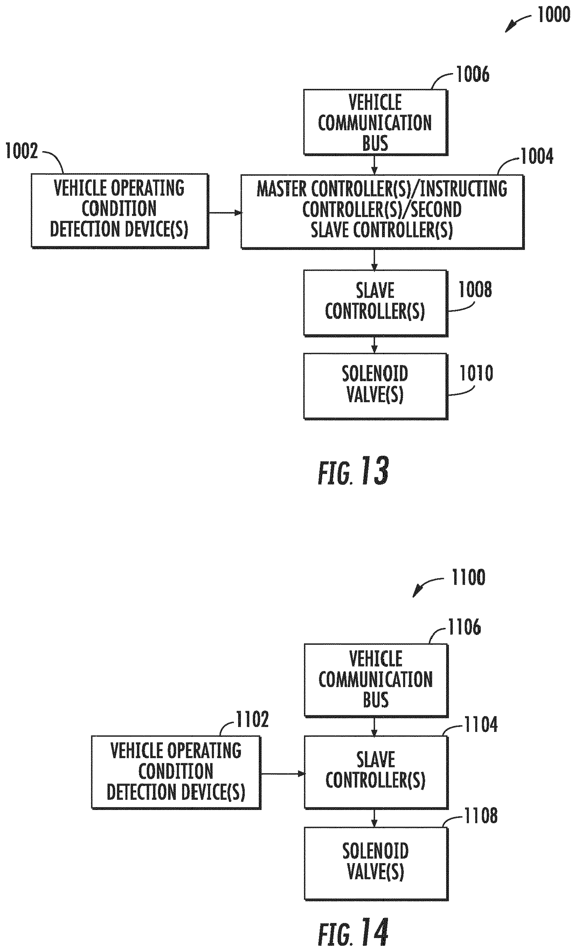

FIG. 13 is a diagram illustrating an electrical control system 1000 for a vehicle according to an embodiment of the disclosure. One or more detection devices 1002 are used to detect the occurrence of one or more pre-determined vehicle operating conditions. As discussed previously, the one or more per-determined vehicle operating conditions may be an instruction from a user, a wheel slip condition, a loss of traction condition and/or a spin out condition.

When the one or more detection devices 1002 detects the occurrence of one or more of the one or more pre-determined vehicle operating conditions, one or more second controllers 1004 send an instruction over a vehicle communication bus 1006. In accordance with an embodiment of the disclosure and as a non-limiting example, the one or more second controllers 1004 may comply with SAE J-1939, SAE J-1939-71, SAE J-1939-82, SAE J-1939-84 and/or ISO-11898 standards. By making the one or more second controllers 1004 compliant with SAE J-1939, SAE J-1939-71, SAE J-1939-82, SAE J-1939-84 and/or ISO-11898 standards, it allows the one or more second controllers 1004 to send, receive and/or interpret messages formatted according to SAE J-1939 and/or SAE J-1939-71 standard protocol(s). As a non-limiting example, the one or more second controllers 1004 may be a master controller, an instructing controller, a second slave controller or any other controller that is capable of sending, receiving and/or interpreting messages formatted according to SAE J-1939 and/or SAE J-1939-71 standard protocol(s).

As previously discussed, the vehicle communication bus 1006 is a specialized internal communications network that interconnects the various components found in the vehicle (not shown). In a non-limiting example, the vehicle communication bus 1006 may be a controller area network (CAN bus) that conforms to SAE J-1939, SAE J-1939-71, SAE J-1939-82, SAE J-1939-84 and/or ISO-11898 standards. The CAN bus is a type of vehicle communication bus 1006 that is designed to allow the various micro-controllers and devices in the vehicle (not shown) to communicate with each other without the need for a host computer. By making the vehicle communication bus 1006 compliant with SAE J-1939, SAE J-1939-71, SAE J-1939-82, SAE J-1939-84 and/or ISO-11898 standards, it allows the vehicle communication bus 1006 to send, receive and/or interpret messages formatted according to SAE J-1939 and/or SAE J-1939-71 standard protocol(s).

Once the instruction sent by the one or more second controllers 1004 is received by one or more slave controllers 1008, the one or more slave controllers 1008 instruct one or more solenoid valves 1010 to either open on close. According to one embodiment, the one or more solenoid valves 1010 may comply with SAE J-1939, SAE J-1939-71, SAE J-1939-82, SAE J-1939-84 and/or ISO-11898 standards. SAE J-1939 is an internal vehicle communication network that interconnects the various components in the vehicle (not shown) allowing for communication and diagnostics among vehicle components. By making the one or more solenoid valves 1010 compliant with SAE J-1939, SAE J-1939-71, SAE J-1939-82, SAE J-1939-84 and/or ISO-11898 standards, it allows the one or more solenoid valves 1010 to send, receive and/or interpret messages formatted according to SAE J-1939 and/or SAE J-1939-71 standard protocol(s). In a non-limiting example, the one or more solenoid valves 1010 may be a pneumatic solenoid valve that is in pneumatic communication with the compressed air-supply (not shown) as previously discussed herein.

As previously discussed and according to an embodiment of the disclosure, the one or more slave controllers 1008 may comply with SAE J-1939, SAE J-1939-71, SAE J-1939-82, SAE J-1939-84 and/or ISO-11898 standards. By making the one or more slave controllers 1008 compliant with SAE J-1939, SAE J-1939-71, SAE J-1939-82, SAE J-1939-84 and/or ISO-11898 standards, it allows the one or more slave controllers 1006 to send, receive and/or interpret messages formatted according to SAE J-1939 and/or SAE J-1939-71 standard protocol(s).

When the one or more second controllers 1004 instruct the one or more solenoid valves 1010 to open, a differential locking system sliding collar (not shown) engages a plurality of differential case clutch teeth (not shown) thereby locking the differential (not shown) and preventing a differential action from occurring within the differential (not shown). As a non-limiting example, the differential (not shown) may be an inter-axle differential, a forward tandem axle differential, a rear tandem axle differential, a front axle differential and/or a rear axle differential.

When the one or more second controllers 1004 instruct the one or more solenoid valves 1010 to close, the differential locking system sliding collar (not shown) disengages the plurality of differential case clutch teeth (not shown) thereby unlocking the differential (not shown) and allowing a differential action to occur within the differential (not shown).

FIG. 14 is a diagram illustrating an electrical control system 1100 for a vehicle (not shown) according to an alternative embodiment of the disclosure. One or more detection devices 1102 are used to detect the occurrence of one or more pre-determined vehicle conditions. As discussed previously, the one or more per-determined vehicle conditions may be an instruction from a user, a wheel slip condition, a loss of traction condition and/or a spin out condition.

When the one or more detection devices 1102 detect the occurrence of one or more of the one or more pre-determined vehicle operating conditions, one or more slave controllers 1104 send an instruction over a vehicle communication bus 1106 to instruct the one or more solenoid valves 1108 to either open or close. The one or more slave controllers 1108 may be any controller in the vehicle communication bus data-link that has adequate memory to accommodate the control logic to engage and disengage the differential locking system (not shown). According to one embodiment of the disclosure, the one or more slave controllers 1108 comply with SAE J-1939, SAE J-1939-71, SAE J-1939-82, SAE J-1939-84 and/or ISO-11898 standards. By making the one or more slave controllers 1108 compliant with SAE J-1939, SAE J-1939-71, SAE J-1939-82, SAE J-1939-84 and/or ISO-11898 standards, it allows the one or more slave controllers 1108 to send, receive and/or interpret messages formatted according to SAE J-1939 and/or SAE J-1939-71 standard protocol(s).

As previously discussed, the vehicle communication bus 1106 is a specialized internal communications network that interconnects the various components found in the vehicle (not shown). In a non-limiting example, the vehicle communication bus 1106 may be a controller area network (CAN bus) that conforms to SAE J-1939, SAE J-1939-71, SAE J-1939-82, SAE J-1939-84 and/or ISO-11898 standards. The CAN bus is a type of vehicle communication bus 1106 that is designed to allow the various micro-controllers and devices in the vehicle (not shown) to communicate with each other without the need for a host computer. By making the vehicle communication bus 1106 compliant with SAE J-1939, SAE J-1939-71, SAE J-1939-82, SAE J-1939-84 and/or ISO-11898 standards, it allows the vehicle communication bus 1106 to send, receive and/or interpret messages formatted according to SAE J-1939 and/or SAE J-1939-71 standard protocol(s).

In accordance with an embodiment of the disclosure and as a non-limiting example, the one or more solenoid valves 1108 may comply with SAE J-1939, SAE J-1939-71, SAE J-1939-82, SAE J-1939-84 and/or ISO-11898 standards. SAE J-1939 is an internal vehicle communication network that interconnects the various components in the vehicle (not shown) allowing for communication and diagnostics among vehicle components. By making the one or more solenoid valves 1108 compliant with SAE J-1939, SAE J-1939-71, SAE J-1939-82, SAE J-1939-84 and/or ISO-11898 standards, it allows the one or more solenoid valves 1108 to send, receive and/or interpret messages formatted according to SAE J-1939 and/or SAE J-1939-71 standard protocol(s). As a non-limiting example, the one or more solenoid valves 1108 may be a pneumatic solenoid valve that is in pneumatic communication with the compressed air-supply (not shown).

When the one or more slave controllers 1104 instruct the one or more solenoid valves 506 to open, a differential locking system sliding collar (not shown) engages a plurality of differential case clutch teeth (not shown) thereby locking the differential (not shown) and preventing a differential action from occurring within the differential (not shown). As a non-limiting example, the differential (not shown) may be an inter-axle differential, a forward tandem axle differential, a rear tandem axle differential, a front axle differential and/or a rear axle differential.

When the one or more slave controllers 1104 instruct the one or more solenoid valves 1106 to close, the differential locking system sliding collar (not shown) disengages the plurality of differential case clutch teeth (not shown) thereby unlocking the differential (not shown) and allowing a differential action to occur within the differential (not shown).

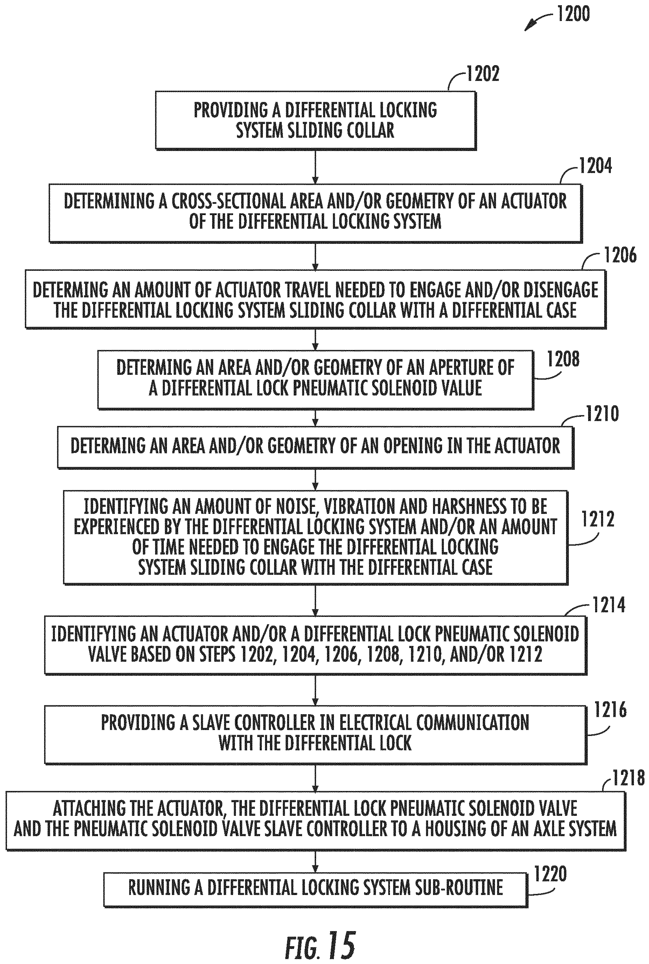

FIG. 15 is a flow chart illustrating a method of operating a differential locking system 1200 according to an embodiment of the disclosure. As illustrated in FIG. 15 of the disclosure, the first step in the method of operating the differential locking system 1200 is to provide a differential locking system sliding collar 1202. Once the differential locking system sliding collar has been provided 1202, an amount of travel needed to engage and/or disengage the differential locking system sliding collar with a differential case having a plurality of differential case clutch teeth 1206. As illustrated in FIG. 15 of the disclosure, the method of operating the differential locking system 1200 further includes the steps of determining an area and/or geometry of an aperture of a differential lock pneumatic solenoid valve 1208, an actuator 1204 and/or an opening in the actuator 1210.

The method of operating the differential locking system 1200 further includes identifying an amount of noise, vibration and harshness to be experienced by a differential locking system and/or identifying an amount of time needed to engage the differential locking system sliding collar with the differential case 1212. Based on the information obtained in steps 1204, 1206, 1208, 1210 and/or 1212 an actuator and/or a differential lock pneumatic solenoid valve are identified 1214.

Once the differential lock pneumatic solenoid valve has been identified 1214, a pneumatic solenoid valve slave controller is provided and put into electrical communication with the differential lock pneumatic solenoid valve 1216. The actuator, the differential lock pneumatic solenoid valve and the pneumatic solenoid valve slave controller are then attached to at least a portion of an outer surface of a housing of an axle system 1218. Once the actuator, the differential lock pneumatic solenoid valve and the pneumatic solenoid valve slave controller are then attached have been attached to the housing of the axle system a differential locking system sub-routine is run 1220.

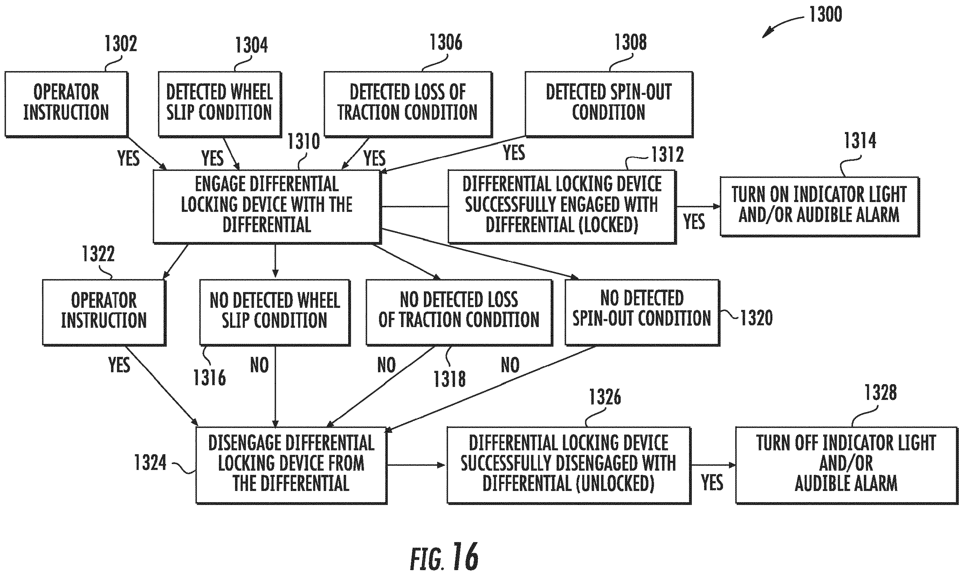

FIG. 16 is a flow chart illustrating a sub-routine 1300 used to engage and/or disengage a differential locking system according to an embodiment of the disclosure with a differential case of a differential assembly of an axle system housing. If one or more detectors (not shown) detect a pre-determined vehicle operating condition 1302, 1304, 1306 or 1308, then a signal is sent over a vehicle communication bus (not shown) to one or more slave controllers (not shown) to open one or more solenoid valves (not shown). As illustrated in FIG. 16 and as a non-limiting example, the one or more pre-determined vehicle operating conditions may be a wheel slip condition 1304, a loss of traction condition 1306, a spin out condition 1308 and/or an instruction from an operator to lock and/or unlock the differential 1302.

As previously discussed, the vehicle communication bus (not shown) is a specialized internal communications network that interconnects the various components found in the vehicle (not shown). In a non-limiting example, the vehicle communication bus (not shown) may be a controller area network (CAN bus) that conforms to SAE J-1939, SAE J-1939-71, SAE J-1939-82, SAE J-1939-84 and/or ISO-11898 standards. As previously discussed, the CAN bus is a type of vehicle communication bus (not shown) that is designed to allow the various micro-controllers and devices in the vehicle (not shown) to communicate with each other without the need for a host computer. By making the vehicle communication bus (not shown) compliant with SAE J-1939, SAE J-1939-71, SAE J-1939-82, SAE J-1939-84 and/or ISO-11898 standards, it allows the vehicle communication bus (not shown) to send, receive and/or interpret messages formatted according to SAE J-1939 and/or SAE J-1939-71 standard protocol(s).

According to one embodiment of the disclosure, the one or more slave controllers (not shown) comply with SAE J-1939, SAE J-1939-71, SAE J-1939-82, SAE J-1939-84 and/or ISO-11898 standards. By making the one or more slave controllers (not shown) compliant with SAE J-1939, SAE J-1939-71, SAE J-1939-82, SAE J-1939-84 and/or ISO-11898 standards, it allows the one or more slave controllers (not shown) to send, receive and/or interpret messages formatted according to SAE J-1939 and/or SAE J-1939-71 standard protocol(s).

Furthermore, as a non-limiting example, the one or more solenoid valves (not shown) may comply with SAE J-1939, SAE J-1939-71, SAE J-1939-82, SAE J-1939-84 and/or ISO-11898 standards. SAE J-1939 is an internal vehicle communication network that interconnects the various components in the vehicle (not shown) allowing for communication and diagnostics among vehicle components. By making the one or more solenoid valves (not shown) compliant with SAE J-1939, SAE J-1939-71, SAE J-1939-82, SAE J-1939-84 and/or ISO-11898 standards, it allows the one or more solenoid valves (not shown) to send, receive and/or interpret messages formatted according to SAE J-1939 and/or SAE J-1939-71 standard protocol(s). In a non-limiting example, the one or more solenoid valves (not shown) may be a pneumatic solenoid valve that is in pneumatic communication with the compressed air-supply (not shown).

Once the one or more solenoid valves (not shown) have been opened, an actuator (not shown) is able to actuate a differential locking system (not shown) and engage 1310 the differential (not shown). When the differential locking system sliding collar (not shown) is successfully engaged with the differential case (not shown), the differential (not shown) is locked thereby preventing a differential action from occurring within the differential (not shown). As a non-limiting example, the differential (not shown) may be an inter-axle differential, a forward tandem axle differential, a rear tandem axle differential, a front axle differential and/or a rear axle differential.

According to an embodiment of the disclosure and as a non-limiting example, the vehicle (not shown) may include an indicator light (not shown) and/or an audible alarm (not shown) within the cab of the vehicle (not shown). The indicator light (not shown) and/or the audible alarm (not shown) informs the user that the differential locking system sliding collar (not shown) is successfully engaged with the differential case (not shown) and that the differential (not shown) has been successfully locked. As illustrated in FIG. 16, once differential locking system sliding collar (not shown) has been successfully engaged 1312 with the differential case (not shown), a signal is sent to the cab of the vehicle (not shown) to turn on 1314 the indicator light (not shown) and/or sound 1314 the audible alarm (not shown).

Once the differential (not shown) has been successfully locked 1312, the differential (not shown) will remain locked until the one or more detectors (not shown) no longer detect a wheel slip condition 1316, loss of traction condition 1318, spin-out condition 1320 or an instruction is sent from the user 1322 to unlock the differential (not shown). When the one or more detectors (not shown) no longer detect a wheel slip condition 1316, loss of traction condition 1318, spin-out condition 1320 or an instruction is sent from the user 1322 to unlock the differential (not shown), a signal is sent over the vehicle communication bus (not shown) to the one or more slave controllers (not shown) to close the one or more solenoid valves (not shown).

Once the one or more solenoid valves (not shown) have been closed, the differential locking system sliding collar (not shown) is disengaged 1324 from the differential case (not shown) thereby allowing a differential action to occur within the differential (not shown).

According to the embodiment when the indicator light (not shown) and/or the audible alarm (not shown) is used, when the differential (not shown) has been successfully unlocked 1326, a signal is sent to the cab of the vehicle (not shown) to turn off 1328 the indicator light (not shown) and/or sound the audible alarm (not shown). In accordance with an alternative embodiment of the disclosure, the audible alarm (not shown) may remain on 1314 while the differential (not shown) is locked 1312 and once the differential (not shown) is successfully unlocked 1326, the audible alarm (not shown) is turned off 1328.

In accordance with the provisions of the patent statutes, the present invention has been described to represent what is considered to represent the preferred embodiments. However, it should be noted that this invention can be practiced in other ways than those specifically illustrated and described without departing from the spirit or scope of this invention.

## Claims

1. An axle system, comprising:
a housing having an inner surface and an outer surface defining a hollow portion therein;
wherein said housing has an axle half shaft housing and a protruding portion;
wherein said protruding portion of said housing is extends outboard from an outer surface of said housing proximate to said axle half shaft housing;
wherein said protruding portion of said housing has an inner surfaced an outer surface defining a hollow portion therein;
a differential assembly comprising a differential case, a first side gear, a second side gear and one or more pinion gears;
wherein said differential case has a first end portion, a second end portion, an inner surface and an outer surface;
wherein a plurality of differential case clutch teeth extend from at least a portion of said outer surface of said second end portion of said differential case;
a stub shaft having a first end portion and a second end portion;
wherein at least a portion of said first end portion of said stub shaft is drivingly connected to at least a portion of said second side gear of said differential assembly;
an axle half shaft having a first end portion, a second end portion and an outer surface;
wherein at least a portion of said first end portion of said axle half shaft is rotatively connected to at least a portion of said second end portion of said stub shaft;
a differential locking system sliding collar;
wherein said differential locking system sliding collar is in sliding and driving engagement with at least a portion of said outer surface of said first end portion of said axle half shaft;
wherein a plurality of differential locking system sliding collar clutch teeth circumferentially extend from at least a portion of an outer surface of a first end portion of said differential locking system sliding collar;
wherein said plurality of differential locking system sliding collar clutch teeth are selectively engageable with said plurality of differential case clutch teeth on said second end portion of said differential case;
an actuator in driving engagement with said differential locking system sliding collar;
wherein at least a portion of said actuator is disposed within said hollow portion of said protruding portion of said housing;
a differential lock pneumatic solenoid valve in pneumatic communication with said actuator via an opening extending from said inner surface to said outer surface of said protruding portion of said housing;
wherein at least a portion of an outer surface of said differential lock pneumatic solenoid valve is integrally connected to at least a portion of said outer surface of said protruding portion of said housing;
wherein said differential lock pneumatic solenoid valve is J-1939 and/or ISO-11898 compliant;
a pneumatic solenoid valve slave controller in electrical communication with said differential lock pneumatic solenoid valve;
wherein said pneumatic solenoid valve slave controller is interposed between said differential lock pneumatic solenoid valve and said outer surface of said housing ;
wherein said pneumatic solenoid valve slave controller is J-1939 and/or ISO-11898 compliant;
a second controller in electrical communication with said pneumatic solenoid valve slave controller and a vehicle communication bus;
wherein in response to a pre-determined vehicle operating condition an instruction from said second controller over said vehicle communication bus instructs said slave controller to open said differential lock pneumatic solenoid valve and actuate said actuator; and
wherein in response to an absence of said pre-determined vehicle operating condition an instruction from said second controller over vehicle communication bus instructs said slave controller to close said differential lock pneumatic solenoid valve.

2. The axle system of claim 1, wherein said pneumatic solenoid valve slave controller is a multilayered board having a plurality of layers.

3. The axle system of any one of the preceding claims, wherein said pneumatic solenoid valve slave controller further comprises one or more pressure sensors, one or more position sensors and/or one or more temperature sensors.

4. The axle system of any one of the preceding claims, wherein said pneumatic solenoid valve slave controller further comprises a hollow interior portion; and
wherein said hollow interior portion of said pneumatic solenoid valve slave controller is of a size and shape to receive and/or retain at least a portion of a pneumatic solenoid air-line that is in pneumatic communication with said differential lock pneumatic solenoid valve and a compressed air supply.

5. The axle system of any one of the preceding claims, wherein said differential assembly is an inter-axle differential, a forward tandem axle differential, a rear tandem axle differential, a front axle differential and/or a rear axle differential.

6. The axle system of any one of the preceding claims, wherein said vehicle communication bus is a controller area network (CAN bus) is J-1939 and/or ISO-11898 compliant.

7. The axle system of any one of the preceding claims, wherein said second controller is a second slave controller, an instructing controller, a master controller or any other controller in said vehicle communication bus that has adequate memory to accommodate a control logic to engage and disengage said differential locking device.

8. The axle system of any one of the preceding claims, said vehicle operating condition is a wheel slip condition, a loss of traction condition, a spin out condition and/or an instruction from a user.

9. The axle system of any one of the preceding claims, wherein at least a portion of said differential lock pneumatic solenoid valve and said pneumatic solenoid valve slave controller are disposed within a differential locking system housing.

10. A method for controlling a differential locking system, comprising the steps of:
providing a differential locking system sliding collar;
determining an amount of actuator travel needed to engage and/or disengage said differential locking system sliding collar with a differential case;
determining a cross-sectional area and/or geometry of said actuator of a differential locking system;
determining an area and/or geometry of an aperture of a differential lock pneumatic solenoid valve;
determining an area and/or geometry of an opening in said actuator;
identifying an amount of noise, vibration and/or harshness to be experienced by said differential locking system and/or an amount of time needed to engage said differential locking system sliding collar with said differential case;
identifying an actuator and/or a differential lock pneumatic solenoid valve, wherein said actuator and/or said differential lock pneumatic solenoid valve is identified based on said amount of actuator travel determined, said cross-sectional area and/or geometry of said actuator of a differential locking system determined, said area and/or geometry of an aperture of a differential lock pneumatic solenoid valve determined, said area and/or geometry of an opening in said actuator determined, said amount of noise, vibration and/or harshness identified and/or said amount of time needed to engage said differential locking system sliding collar with said differential case;
providing a pneumatic solenoid valve slave controller in electrical communication with said differential lock pneumatic solenoid valve;
connecting said pneumatic solenoid valve slave controller to a J-1939 and/or ISO-11898 compliant controller area network (CAN bus);
identifying a presence of one or more pre-determined vehicle operating conditions;
sending an instruction over said J-1939 and/or ISO-11898 compliant CAN Bus from a second controller to said slave controller to open said differential lock pneumatic solenoid valve in response to said one or more pre-determined vehicle operating conditions identified;
opening said differential lock pneumatic solenoid valve;
actuating said actuator identified to selectively engage said differential locking system sliding collar with said differential case;
identifying an absence of said one or more pre-determined vehicle operating conditions;
sending an instruction over said J-1939 and/or ISO-11898 compliant CAN Bus from said second controller to said slave controller in response to said absence of said one or more pre-determined vehicle conditions to close said differential lock pneumatic solenoid valve;
closing said differential lock pneumatic solenoid valve; and
disengaging said differential locking system sliding collar from said differential case.

11. The method according to claim 10, wherein said pre-determined vehicle operating condition is a wheel slip condition, a loss of traction condition and/or a spin out condition.

12. The method according to any one of claims 10 and 11, wherein said second controller is a second slave controller, an instructing controller, a master controller or any other controller that has adequate memory to accommodate a control logic to engage and disengage said differential locking device.

13. The method of any one of claims 10 to 12, further comprising the steps of:
identifying said engagement of said differential locking system sliding collar with said differential case;
sending a signal from said differential locking system to a cab of a vehicle when said differential locking system sliding collar is engaged with said differential case;
turning on an indicator light in said cab of said vehicle;
identifying said disengagement of said differential locking system sliding collar from said differential case;
sending a signal from said differential locking system to said cab of said vehicle when said differential locking system sliding collar is disengaged with said differential case; and
turning off said indicator light in said cab of said vehicle.
